(19) **Europäisches Patentamt**
**European Patent Office**
**Office européen des brevets**

(11) **EP 1 907 453 B1**

(12) **EUROPEAN PATENT SPECIFICATION**

(45) Date of publication and mention
of the grant of the patent:
**31.12.2008 Bulletin 2009/01**

(51) Int Cl.:
*C08J 3/12* <sup>(2006.01)</sup>     *C09D 5/03* <sup>(2006.01)</sup>
*C09D 163/00* <sup>(2006.01)</sup>     *C09D 167/00* <sup>(2006.01)</sup>

(21) Application number: **06792491.0**

(22) Date of filing: **11.07.2006**

(86) International application number:
**PCT/EP2006/064086**

(87) International publication number:
**WO 2007/006777 (18.01.2007 Gazette 2007/03)**

(54) **POWDER COATING MATERIALS**

PULVERBESCHICHTUNGSMATERIALIEN

MATERIAUX DE REVETEMENT EN POUDRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.07.2005 EP 05106312**

(43) Date of publication of application:
**09.04.2008 Bulletin 2008/15**

(73) Proprietor: **Akzo Nobel Coatings International BV 6824 BM Arnhem (NL)**

(72) Inventors:
• **RING, John**
**Newcastle-Upon-Tyne NE20 9NF (GB)**

• **SPENCER, Steven Antony**
**Durham DH7 7QQ (GB)**
• **CORDINER, Andrew George**
**Tyne And Wear NE8 4NS (GB)**

(74) Representative: **Schalkwijk, Pieter Cornelis Akzo Nobel N.V.**
**Intellectual Property Department**
**P.O. Box 9300**
**6800 SB Arnhem (NL)**

(56) References cited:
**US-A- 5 955 530         US-A1- 2004 009 340**

**Description**

FIELD OF THE INVENTION

This invention relates to powder coating materials and to their use.

Powder coatings are solid compositions which are generally applied by an electrostatic spray process in which the powder coating particles are electrostatically charged by the spray gun and the substrate is earthed. Alternative application methods include fluidised-bed processes. After application, the powder is heated to melt and fuse the particles and to cure the coating. The powder coating particles which do not adhere to the substrate can be recovered for re-use so that powder coatings are economical in use of ingredients. Also, powder coating materials are generally free of added solvents and, in particular, do not use organic solvents and are accordingly non-polluting.

Powder coating materials generally comprise a solid film-forming resin, usually with one or more colouring agents such as pigments, and optionally they also contain one or more performance additives. They are usually thermosetting, incorporating, for example, a film-forming polymer and a corresponding curing agent (which may itself be another film-forming polymer).

BACKGROUND TO THE INVENTION

Powder coating materials are generally prepared by intimately mixing the ingredients, for example in an extruder, at a temperature above the softening point of the film-forming polymer(s) but below a temperature at which significant pre-reaction would occur. The extrudate is usually rolled into a flat sheet and comminuted, producing a powder with a range of particle sizes. The smaller particles, however, give rise to problems in handling and application. Such problems become more pronounced when the proportion of fine particles is high. For a thin film coating, for example, generally a lower maximum particles size would be required, but the grinding process (or "micronising") to produce a lower maximum particle size would also lead to a lower mean particle size and more particles at the lower end of the distribution, increasing the handling and application problems.

Conventionally, these problems have been attributed to particles below 10μm in size, and manufacturers of powder coating materials generally carry out a classification process to reduce this fraction, although the classification processes available (utilising air classifiers) tend to remove also some particles above the desired size, and in practice a compromise has to be reached between reduction of the sub-10μm content and retention of particles over 10μm.

Further improvements in handling and application are brought about by addition of fluidity-assisting additives such as alumina or silica. WO 94/11446 describes the use of certain inorganic materials such as the combination of alumina and aluminium hydroxide as fluidity-assisting additives for powder coating materials in which at least 95% by volume of the particles are below 50μm, and WO 00/01775 describes the use of wax-coated silica for similar and related purposes. Even with such additives, however, many powders would still exhibit some application and handling problems, placing a limit on reduction in maximum particle size. We have now found that powders having a particular particle size distribution, with a measurement base related to the surface area of the powder, have particularly useful properties. In particular, powders with a given average or maximum particle size show improved properties when prepared in such a way as to have the defined distribution, compared with powders having the same average or maximum particle size but a different particle size distribution.

SUMMARY OF THE INVENTION

The invention provides a powder coating material comprising particles having a particle size distribution which satisfies the following equation:

$$\frac{[d(s,90)/d(s,10)]^2}{[d(s,90)-7]} \leq 3.5$$

and in which d(s,90) is greater than 7μm, d(s,90) and d(s,10) being measured in microns.

As will be understood in the art, the surface area percentiles d(s,x) indicate for a stated particle size (d) the percentage (x) of the total surface area of the particles that lies below the stated particle size; the percentage (100-x) of the total area lies at or above the stated size. Thus, for instance, d(s,50) would be the median particle size of the sample (based on surface area), and on a particle size distribution graph d(s,90) is the point on the curve read along the particle size axis where the area under the curve below this particle size represents 90% by surface area of the particles. Thus, d(s,90) = 7 microns indicates that 90% of the particles (the percentage calculated on the surface area) are below 7 microns and 10% are above this size. Particle sizes are measurable by laser diffraction techniques, for example by the Malvern Mastersizer, and unless indicated otherwise the sizes quoted are as measured by the Mastersizer 2000, refractive index 1.45, absorption index 0.01.

Similar measurements can be made relating to the percentage of particles related to volume. Thus d(v,x) indicates for a stated particle size (d) the percentage (x) of the total volume of the particles that lies below the stated particle size; the percentage (100-x) of the total volume lies at or above the stated size. Thus, for instance, d(v,50) would be the median particle size of the sample, and on a particle size distribution graph d(v,90) is the point on the curve read along the particle size axis where the area under the curve below this particle size represents 90% by volume of the particles. Thus, d(v,90) = 60 microns indicates that 90% of the particles (by volume) are below 60 microns and 10% are above this size.

Powders of the present invention show improved handling and application properties compared with powders of the prior art.

DETAILED DESCRIPTION OF THE INVENTION

In the powders of the invention, d(s,90) is greater than $7\mu m$, preferably greater than $10\mu m$. Especially preferred powders also have a d(s,90) of no more than $90\mu m$, preferably no more than $75\mu m$, especially less than $60\mu m$, still more preferably less than $50\mu m$.

In the powders of the invention, d(s,10) is preferably greater than $3\ \mu m$, more preferably greater than $4\ \mu m$. It is preferred for the d(s,10) to be at most $13\ \mu m$, more preferably at most $10\ \mu m$, still more preferably at most $7\ \mu m$.

Obviously, the values for the d(s,90) and d(s,10) of the powders according to the invention need to be matched so as to ensure that the relation between the two parameters fits the formula presented above.

In conventional manufacture, quality control is generally operated by reference to volume distributions and in particular to the content of sub-$10\mu m$ particles when referring to the bottom end classification. We have found that, in contrast, surface area parameters should be considered and in particular the ratio $[d(s,90)/d(s,10)]^2$ and its relationship to d(s,90). The Malvern Mastersizer instruments can provide data for any desired surface area or volume percentile and can provide the percentage content of particles below any desired size. Measurement of the d(s,90) and d(s,10) values for representative commercial powders has shown that those powders do not comply with the parameters required according to the invention.

Preferably, $[d(s,90)/d(s,10)]^2 \div [d(s,90)-7] \leq 3$, more preferably $\leq 2.7$, still more Preferably $\leq 2.5$, even more preferably $\leq 1.9$ in particular $\leq 1.75$. Generally this value is above 1.

Powders of the present invention show improved handling and application properties compared with those of comparable maximum particle size values, as demonstrated, for example, by measurement of the fluidity of the bulk powder, for example by measurement of aeration gradient or the Hausner Ratio.

Various methods of measuring fluidity are possible. One conventional method calculates an Aeration Index. In this method, an instrument (typically a Freemantech FT3) measures energy contained in a sample of powder at zero airflow and subsequently at a variety of measured airflows. The Aeration Index is equal to the energy measured at zero airflow divided by the energy measured at a defined airflow. Depending upon the situation, however, the Aeration Index can be heavily dependent upon the errors in the devisor (denominator), and therefore a better measure is the difference in energy between two measurement points to give an aeration gradient.

Another method utilises the Hausner ratio. Information on the Hausner ratio (the ratio of the tapped density to aerated bulk density) and on its use as a fluidisability index can be found in the book "*Powder Coating Testing*: *Methods of measuring the physical properties of bulk powders*" by Svarovsky, published by Kuwer Academic Publisher, Oct 1987, sections 3.2 and 5.2.4. The lower the Hausner Ratio, the more fluidisable the powder and the better its handling and application properties. For example, because of reduced cohesiveness, equipment becomes easier to clean.

Many powders of the present invention have Hausner Ratios below 1.4, and Hausner Ratios as low as 1.25 or below should especially be mentioned, whereas comparable powders of the prior art usually have higher ratios. Typically, commercially available powders having d(v,90) in the range of from 30 to $45\mu m$ have a Hausner Ratio of about 1.44 or 1.47 and are classified as cohesive, so that the use of fluidity-assisting additives is generally required. Powders of lower d(v,90) have Hausner Ratios that are even higher, and in some cases the powder is so cohesive as not to permit any Hausner Ratio measurement to be made. There are no commercially available powder coating materials having a d(v,90) below $30\mu m$. However, viable powders having a d(v,90) in this range become possible according to the invention. These powders show a reduced "orange peel" effect in the applied coating, which is of considerable importance for the production of coatings where very high flow, smooth films are required, for example for primer coatings in the automotive field. The Hausner Ratios of the powders of the present invention are generally at least 1.1.

The d(v,90) of the powders according to the invention is preferably at most $120\ \mu m$, more preferably at most $80\ \mu m$. It is preferred for the d(v,90) to be at least $7\ \mu m$, more preferably at least $10\ \mu m$.

Powders of the invention also show improvements in process stability and penetration into recessed areas in application processes. This is of particular importance in relation to powders with d(v,90) in the range of from 20 to 60μm, in particular from 25 to 50 μm, more in particular from 30 to 45 μm. This is a particular embodiment of the present invention.

Powders of the invention also offer the possibility of a number of further advantages compared with the prior art.

Firstly, in comparison with the prior art, powders of the present invention show better consistency in finish or colour across an article and from article to article. Inconsistencies in thickness from article to article can lead, for example, to perceived differences in aesthetics, especially, for example, in ceiling tiles which are viewed at a low angle. Powders of the present invention allow improved control of film thickness and hence greater consistency in deposition from article to article.

Conventionally, also, in an electrostatic spray process, alignment of the powder along the lines of electric field from an electrostatic spray gun can lead to the "picture frame effect" on an article, where the powder is deposited at the outer rim of the article, giving a different depth of colour at the rim compared with the middle of the article. Such effects are reduced with powders of the invention.

The present invention is also especially advantageous in the preparation of powder for tribostatic application to a substrate. Powders of the present invention have particularly advantageous tribostatic properties, leading to increased charging efficiency compared with conventional powders of comparable d(v,90).

Incorporation of a wider range of materials should also be mentioned. Powders may be formulated using more highly functional materials or more viscous materials that would otherwise lead to unacceptable reduction in flow and leveling. Coating compositions of the invention may also have a high level of pigment, and incorporation of those pigments having severely detrimental effect on flow and appearance may become possible.

Appearance may be maintained even with compositions based on resins having short gel times, which would normally reduce flow.

The invention may also permit the preparation of powder coating compositions containing up to 20%, or more, of filler. Addition of filler facilitates manufacture and provides tougher coatings, as well as leading to a reduction in cost, but even 5% of filler added to a conventional powder would give an unacceptable appearance in the final coating. The addition of 10 to 20% or more of filler to a powder of the present invention to provide a coating with high surface hardness and acceptable flow and gloss should especially be mentioned.

Powders of the invention may comprise single particles or clusters. Cluster structures, or macro-agglomerates (otherwise referred to as bonded particles), may be obtained by any suitable method, for example by mechanical fusion, spray drying or melt atomisation methods, the conditions being specifically selected to produce powders of the required particle size distribution. Agglomeration processes leading to cluster structures are described, for example, in EP 372860 A and EP 539385 A, and melt atomisation processes are described, for example, in US 5,461,089. However, the specific agglomeration processes carried out in those applications do not lead to powders having the particle size distribution required by the present invention.

Our copending application with the title Process for preparing a powder coating composition (Inventors Morgan, Koenraadt, Beijers, Kittle) filed concurrently herewith also describes processes for the formation of powders complying with the present invention. Such processes include spray drying of aqueous dispersions or emulsions, in which process water is removed and solid particles combined. Without wishing to be bound by theory, we believe that, in contrast to the macro-agglomeration processes of EP 372860 A and EP 539385 A, in the micro-agglomeration spray-drying process of our copending application the solids within each spray droplet can form a discrete powder particle so that, it is believed, the powder comprises a substantial proportion of substantial spherical single particles formed by a fusion-agglomeration process, although some cluster (macro-composite) structures appear also to be formed, it is believed by recirculation of particles in the spray zone of the spray dryer. The discrete particles, micro-composites, formed by the micro-agglomeration process appear to have a smooth surface and to be generally spherical in shape, in contrast to discrete particles produced for example by milling processes conventionally used for powder production.

Agglomeration is normally performed at a specified temperature relative to the Tg of the system. This temperature is usually defined by the degree of agglomeration required (the more agglomeration required, the higher the temperature). In general, for example, mechanical fusion to give a powder of the invention may be carried out at or just above the glass transition temperature (Tg) of the film-forming polymer. (In certain melt atomisation processes, however, for example that of US 5,461,089, temperatures greatly in excess of the Tg may be used for the granulation, for example temperatures in excess of Tg + 100 degrees C.)

In (macro)-agglomeration processes such as described in EP 372860, individual particles in the agglomerates are bonded or at least partially fused together such that the composites, or clusters, formed do not break down under the mechanical and/or electrostatic forces associated with their application to a substrate. An agglomerated powder of the present invention consisting of particles of cluster structure may, for example, be prepared by mechanical fusion, for example by mechanical fusion at a temperature in the range of from 45 to 75°C. For any given starting powder, the precise particle size distribution of the agglomerated powder will depend on a number of factors, for example, for mechanical fusion, the temperature of, and time for, the mechanical fusion operation, the rate of heating, the Tg of the film-forming polymer, the free space inside the mechanical fusion device, and the shear force in the mechanical fusion device (determined by the power/current used). Agglomeration can be carried out under conditions that decrease the content of fine particles and hence increase the d(s,10) value. The greater the d(s,10) value, the smaller the $[d(s,90)/d(s,10)]^2 \div [d(s,90)-7]$ value for a given d(s,90) value; the increase in d(s,90) on agglomeration should be minimised.

For example, a mechanical fusion agglomeration to prepare a powder of the present invention may be carried out using a heater temperature close to the Tg of the film-forming polymer present in the powder, for example with the heater at the Tg temperature, or in the range of up to 10° C below the Tg, e.g. up to 5°C below the Tg, to 15°C, e.g. up to 8°C, above the Tg.

The free space within the equipment is advantageously kept to a minimum so the vessel is filled to the brim. This is to improve the efficiency of the process - less material means less particle-particle interaction and it is this interaction that generates the heat (for larger systems), heat being required for the fusion-agglomeration (bonding). The blade speed is normally continuously altered (by hand or by computer control) both in order to obtain a suitable heating rate and to hold the maximum temperature for the required time. The faster the blade, the higher the rate of temperature increase.

The powder may be heated, by means of the external heater and by the mixer blade, up to a maximum temperature in the range of from the Tg of the powder (i.e. Tg midpoint) to 15°C above the Tg (the higher temperatures being for example suitable for heavily filled powders), preferably from the Tg to Tg + 10°C, especially from the Tg to Tg + 8°C, for example from the Tg to Tg + 5°C, or from the Tg to Tg + 2°C. The powder may then be cooled immediately, or may be held at the maximum temperature for a short period, e.g. for up to 5 mins, especially up to 2 mins, although at lower temperatures longer times may be possible, for example up to 20 mins, or for example up to 40 minutes. To increase the bonding, either a higher temperature or a longer time (at the maximum temperature and/or above the Tg and/or a longer overall time before cooling) is used. Suitably, the powder may be heated to a temperature in the range of Tg to Tg + 4°C and maintained at that temperature for a period of 0 to 2 minutes, or for example it may be heated to a maximum temperature of Tg of the powder and held at that temperature for 0 to 2 minutes, the overall time between the beginning of heating and cooling being substantially 30 minutes.

Overall, the heating process may take, for example, up to 120 mins, especially no more than 60 mins, and generally more than 5 mins, more especially at least 10 mins, often at least 20 mins, for example about 30 to 40 mins. The powder may be at a temperature at or above its Tg for a time of, for example, 2 mins, for example 5 mins, or more before cooling.

Cooling should advantageously be carried out as quickly as possible, while stirring to prevent sticking/fusing of the powder and to assist cooling as the cooler powder in contact with the vessel walls is moved.

Agglomeration can be carried out under conditions that will decrease the content of fine particles and decrease the $[d(s.90)/d(s10)]^2 \div [d(s90)-7]$ value, and give a relatively low increase in d(s,90). Increasing time at a lower temperature may also be advantageous. The time will, of course, be adjusted according to the temperature used and other conditions, relatively gentle conditions being selected to ensure preferential bonding of the finer particles, that is to minimise increase in size of the larger particles. This contrasts with the process of EP 372860, where agglomeration is carried out on powder mixtures of low mean particle size specifically to increase the mean particle size. In EP 539385A, also, no attempt is made to minimise the increase in mean or higher particle size, the aim being simply to combine different components in a flexible mixing scheme and provide a permanent fixing for such components in the powder, while also ensuring that the powder is suitable for application by commercial electrostatic spray gun. The latter specification states that powders for this purpose generally have a particle size distribution between 10 and 120$\mu$m with a mean particle size in the range of from 15 to 75$\mu$m.

We have found, however, that by gentle conditions with a generally slower rate of heating, an increase in the larger particle sizes can be minimised while still ensuring the bonding of fines. Thus, although bonding increases the d(s,10) value and also the d(s,90) value, and decreases the fines fraction but also increases the d(s,90) value, by using gentle conditions, we have found that it is possible to obtain preferential bonding of the finer particles so that there is a relatively greater increase in the d(s,10) value than in the d(s,90) value, and, by selecting powders such that $[d(s,90)/d(s,10)]^2 \div [d(s,90)-7] \leq 3.5$ powders are obtained that have the especial advantages mentioned above.

Thus, for example, the heating conditions may be set by adjustment of the heater temperature and blade speed so as to heat the powder to the desired temperature at a relatively low rate, especially over the temperature range approaching the Tg or the desired maximum temperature. For example, from a temperature about 10 °C to 5°C below the Tg up to the maximum final temperature, or from a temperature 15°C below the final temperature, to that final temperature, the heating rate is advantageously kept low. The rate of heating at least during that time may, for example, be $\leq 4$°C per min, preferably $\leq 3.5$°C per min, especially $\leq 3$°C per min, very especially $\leq 2.5$°C per min, advantageously $\leq 2$°C per min, e.g. 1°C per min, the higher rates, if used, being preferably used at lower temperatures. Thus, for example, heating may be carried out at a rate of about 1 to 2°C per minute at temperatures in the range 4 to 7°C below the final temperature up to the final temperature, especially over the final 5°C before the desired temperature is reached. Adjustment of conditions can be carried out automatically on larger machines. If desired, the temperature increase to the desired final temperature may be carried out in stages, with the very final heating rate, e.g. from a temperature 2 to 3°C below the Tg up to the final temperature, being reduced, e.g. to give a temperature rise of only about 1°C per minute. In general, higher heating rates near the maximum would usually only be used with a lower maximum temperature (and therefore usually longer holding times at that maximum temperature). When the maximum temperature is reached, the conditions are then suitably adjusted to cool the powder or to maintain the temperature constant for the desired period, e.g. for 2 mins, followed preferably by cooling, cooling being carried out, for example, with a low speed of agitation, for example over a period of about 5 to 15 minutes. In contrast to the use of these gentle conditions, a substantially higher heating rate, for example of 5°C per minute or more, as in EP 539385A, would provide powders with too high a d(s,90) and too high a $[d(s,90)/d(s,10)]^2 \div [d(s,90)-7]$ value.

Accordingly, the present invention also provides a process for the preparation of a powder coating material, which comprises mechanical fusion of a powder coating material wherein the powder is brought to a maximum temperature in the range of from the Tg of the powder to 15°C above the Tg, at a heating rate for at least the last 3°C, preferably at least the last 4°C, up to the maximum temperature of no more than 4°C per minute, and after a period in the range of from 0 to 40 minutes at the maximum temperature the powder is cooled.

In this process, it is preferred for the heating rate over for at least the last 4°C up to the maximum temperature to be no more than 3°C per minute, more preferably no more than 2°C per minute. It is also preferred for the specified heating rate is maintained over at least the last 5°C up to the maximum temperature, preferably over at least the last 10°C up to the maximum temperature. It may also be preferred to use a stepped rate of heating, with a heating rate in the range of from 1 to 2°C per minute being used for the last 5°C up to the maximum temperature. The maximum temperature is preferably in the range of from the Tg of the powder to 10°C above the Tg, more preferably in the range of from the Tg of the powder to 8°C above the Tg, still more preferably in the range of from the Tg of the powder to 2°C above the Tg. In a preferred embodiment the maximum temperature is in the range of from the Tg of the powder to 4°C above the Tg, and the powder is maintained at that temperature for a period of from 0 to 2 minutes. It may be preferred for the powder to be cooled after a period in the range of from 0 to 10 minutes at the maximum temperature, more preferably after a period in the range of from 0 to 5 minutes at the maximum temperature, still more preferably after a period in the range of from 0 to 2 minutes at the maximum temperature. It may be preferred for the overall heating time before cooling to be in the range of from 10 to 60 minutes. In a further embodiment the maximum temperature is the Tg of the powder, the powder having been heated to that temperature for substantially 30 minutes.

The present invention also provides a process for the preparation of a powder coating material, which comprises mechanical fusion of a powder coating material, wherein the powder is brought to a maximum temperature in the range of from the Tg of the powder to 8°C above the Tg and the powder is held at that temperature for at least 2 mins, preferably at least 4 mins. The preferred ranges given above also apply to this embodiment.

In an alternative embodiment the powder is prepared in a liquid carrier, and the liquid carrier is subsequently removed and the particles combined into larger particles to form a powder coating composition of the required particle size. Advantageously an aqueous dispersion or emulsion is prepared and spray-dried to remove water and bring about a combination of the particles into larger particles. Our copending application with the title Process for preparing a powder coating composition (Inventors Morgan, Koenraadt, Beijers, Kittle)) filed concurrently herewith describes methods for combinations of particles by this means

Preparation of the liquid composition may be carried out by various means known in the art, including those for the production of aqueous coatings, for example wet grinding (as described, for example, in WO 96/37561 and EP-A 0 820 490), phase inversion emulsification (as described, for example in WO 00/15721), melt dispersion (as described, for example, in WO 97/45476 and WO 01/60506), jet-dispersion (as described, for example in EP-A 0 805 171) or for example by emulsion polymerisation. Preferably, the liquid carrier for the base compositions is water, and the composition is preferably a dispersion or emulsion.

Preferably, the liquid composition is prepared by emulsification, suitably in the presence of a dispersing agent having functional groups capable of reacting with the film-forming material. Alternatively, or additionally, neutralising agents can be used which can form hydrophilic ionised functional groups (e.g. carboxylic groups, sulphonate groups and/or phosphonate groups) which are present in the resin and/or crosslinker.

Liquid compositions prepared by phase inversion emulsification, especially by phase inversion extrusion, should especially be mentioned. In the latter process polymer melts are processed using an extruder, preferably a twinscrew extruder, to disperse such a substance in an aqueous medium. Preparation of aqueous powder coating dispersions prepared by phase inversion extrusion are described in WO 01/28306 and WO 01/59016.

Suitably the solids content of the liquid composition is at least 5%, preferably at least 10%, especially at least 30%, more especially at least 40%, by weight, and for example up to 70%, e.g. up to 60%, by weight, although up to 95% be weight may be possible in the case of a very dense material. High solids contents can be handled more easily if the average particle size is above 80nm.

Removal of liquid carrier may be carried out by drying, filtration, centrifugal separation, or by evaporation, or any combination of such means.

Separation by drying is preferably done by spray-drying, although other drying techniques, for example rotary drying and freeze drying, may be used if so desired. Suitably therefore the liquid carrier is spray-dried, with simultaneous combining of the particles into larger particles of the required particle size. We have found that in the spray drying process the particle size can be controlled by the atomisation process and the water content as, we believe, the solids content of each atomised liquid droplet dries to form an individual powder particle. Increase in atomisation pressure, decrease in orifice dimensions, decrease in solids content of the liquid feed and/or decrease in the feed rate decreases the particle size of the powder produced. It has been found that the equations of Elkotb in Proceedings of ICLASS, 1982, pages 107-115, and those of Lefebre in Atomisation and Spraying, 1999 , page 233, can be applied to predict the atomisation performance and give good correlation to the powders produced by spray-drying.

Spray drying may be carried out, for example, using an inlet air temperature up to 220°C, often up to 200°C, for example up to 180°C. A suitable minimum is, for example; 80°C, and an inlet temperature in the range of up to 200°C , often 150-200°C, should especially be mentioned. The outlet temperature may be, for example, in the range of from 20 to 100°C, more especially 30 to 80°C, preferably in the range of from 55 to 70°C, e.g. substantially 55°C, 65°C, or 70°C.

In an alternative embodiment, drying may be carried out, for example, by freeze-drying, e.g. by lyophilisation, and, if a drying method such as this is used which does not lead to combining into larger particles or if the spray drying does not provide a powder with sufficient bonding of the fines, the particles produced are agglomerated subsequently, for example by mechanical fusion, to produce the required particle size distribution.

Accordingly, the present invention especially provides a powder coating material in which the powder particles have been formed by a fusion-agglomeration process and in which

$$\frac{[d(s,90) \div d(s,10)]^2}{[d(s,90) - 7]} \leq 3.5,$$

d(s,90) being greater than 7 $\mu$m, and d(s,90) and d(s,10) being measured in microns, and to such a powder coating material for use in a powder coating process.

More especially, the powder comprises composite particles in which individual particles are fused or bonded together to form clusters that do not break down under the mechanical and/or electrostatic forces encountered on application to a substrate, or comprise discrete substantially spherical particles formed by a fusion-agglomeration process.

In the clusters, individual particles are combined, but remain separately identifiable in the cluster. In discrete particles, in contrast, complete fusion has taken place so that a single, substantially spherical particle is formed. In contrast to conventional powders, where the end product is the result of milling and classification to remove oversize particles and fines, there is no need for a classification process to remove fines, although of course such a process may be carried out before the fusion-agglomeration if desired.

The powder to be agglomerated may, for example, be a unitary powder (also referred to as "single component"). The powder is usually derived from a single extrudate or obtained, for example, by extrusion of the same components in the same proportions, followed by comminution. Alternatively, two different powders may be mixed prior to agglomeration. These may be of the same or different chemistry and/or colouration. The powder to be agglomerated may, for example, be mixed with a powder which is preferably of substantially identical composition. Thus, the powder to be agglomerated may comprise particles of substantially uniform composition. Powders for admixture may or may not have the same particle size distribution.

The powder to be agglomerated may, for example, have a d(v,90) in the range of from 5 to 80$\mu$m. We have found that in agglomeration it is possible to decrease the content of particles 10$\mu$m or 5$\mu$m or below by, for example, at least 60%, by surface area, while leaving the maximum particle size largely unaffected, and that although there is necessarily an increase in mean particle size as a result of the removal of fine particles, this increase can be made lower than expected for an agglomeration process. Thus, a powder with a substantially reduced content of particles 10$\mu$m or below in size, e.g. 5$\mu$m or below, and with a narrow particle size distribution can be obtained.

Accordingly, the invention further provides a process for the preparation of a powder coating material in which particles of a powder coating material are combined, or agglomerated by a fusion-agglomeration process, into larger particles, the agglomeration conditions or the end point of agglomeration being determined so as to give a particle size distribution in which $[d(s,90)/d(s,10)]^2 \div [d(s,90)-7] \leq 3.5$, preferably $\leq 2.7$, and in which d(s,90) is greater than 7$\mu$m. The present invention also provides a powder coating material thus produced, having the specified powder size distribution.

In contrast to conventional manufacture, this process leads to a more efficient manufacturing process. In conventional manufacture, sub-10$\mu$m fines are removed from the comminuted powder by classification and then discarded or re-processed by re-introduction to the extruder. With a powder of d(v,90) about 40$\mu$m or less, this "fines" waste stream can be up to 25% of the total powder. Although this can be returned to the extruder and re-processed, repeated reprocessing through an extruder can lead to gel formation, which itself gives rise to problems. Thus, recycling is limited, and eventually the fines fraction is discarded. In contrast to that conventional process, where the powder material can be subjected to repeated exposure to temperatures in the range of from 90 to 150°C in the extruder, agglomeration is generally carried out at lower temperature, usually at just above the glass transition temperature of the film-forming polymer (often in the range of from 60 to 80°C). Thus, not only is there substantial reduction in waste because essentially the whole powder is utilised, but the risk of pre-reaction or gelling is considerably reduced. Moreover, agglomeration may provide a powder with a lower content of sub-5$\mu$m particles than can the classification process of the prior art and leads to improvement in fluidity.

An agglomeration process may be carried out one or more times. Thus, for example, after an agglomeration process the d(s,90) and d(s,10) values may be measured and if necessary agglomeration may be continued or repeated until the desired powder is produced. Alternatively, for example, one or more reference processes may be carried out in which the particle size distribution in the combined or agglomerated powder is checked to establish a starting powder and process conditions producing, from that starting powder, an agglomerated powder having the desired parameters.

The present invention also includes non-bonded (non-agglomerated) particles. Thus the preparation of a powder coating material of the invention may include, for example, a comminution step, and a classification step. For example, the process may comprise melting and kneading a raw material for the powder coating and producing pellets or chip therefrom, grinding the pellets into pulverised particles; classifying the powder; and optionally combining or agglomerating the pulverised particles.

The present invention further provides a powder coating materials composed of a particle mass having a particle size distribution in which $[d(s,90)/d(s,10)]^2 \div [d(s,90)-7] \leq 3.5$, preferably $\leq 2.7$, and in which d(s,90) is greater than 7$\mu$m, wherein the particle mass is obtained by a process comprising:

melting and kneading a raw material for a powder coating material and producing pellets or chip therefrom, wherein the raw material comprises a synthetic resin and at least one further ingredient selected from pigments and additives; grinding the pellets or chip into pulverized particles; and classifying the pulverized particles, and/or agglomerating to produce a powder comprising particles in which individual particles are fused or bonded together, the process conditions or the end point of the process being determined so as to give a particle size distribution in which $[d(s,90)/d(s,10)]^2 \div [d(s,90)-7] \leq 3.5$, preferably $\leq 2.7$, and in which d(s,90) is greater than 7$\mu$m.

Usually an agglomeration or combining step is carried out after classifying to remove over-sized particles.

A bonding step to produce agglomerates of cluster structure can, surprisingly, be operated to produce a powder according to the invention in which increase in the maximum particle size is relatively low. This is very valuable because, in some applications, the use of very fine powders would be advantageous; however, previously, such fine powders have had major handling and application problems. The present invention permits the preparation of fine powders with improved handling and application characteristics. In effect, for a given average or maximum particle size, powders having the particle size distribution of the present invention show improved characteristics over powders of the same average or maximum particle size not having the particle size distribution of the present invention.

Powder coating materials of the present invention may then be mixed with one or more fluidity-assisting additives (a "post-blending" process). Such additives (also called flow aids) and how they are used are well known in the field of powder coatings and include, for example, aluminium oxide (alumina) and hydrophobic or hydrophilic silica. Preferably, however, those additives disclosed in WO 00/01775 or in WO 94/11446 are used. The disclosures of those documents are herein incorporated by reference.

A preferred fluidity-assisting additive is the preferred additive combination disclosed in WO 94/11446, comprising aluminium oxide and aluminium hydroxide, preferably in proportions in the range from 30 : 70 to 70 : 30.

Another preferred fluidity-assisting additive is the preferred additive combination disclosed in WO 00/01775, namely a wax-coated silica, optionally in combination with aluminium oxide and/or aluminium hydroxide. Where wax-coated silica is used in combination with alumina, the ratio between these materials is preferably 70:30 to 30:70. Where wax-coated silica is used in combination with aluminium hydroxide the ratio between these materials is preferably 80:20 to 50:50.

Where a combination is used of wax-coated silica, aluminium oxide and aluminium hydroxide, the relative proportions of the additives preferably are as follows: 10-30 wt.% of wax-coated silica, 20-85 wt.% of alumina, and 1-55 wt.% of aluminium hydroxide, all calculated on the total of the three components.

Other post-blend additives which may be mentioned include aluminium oxide and silica also (hydrophobic or hydrophilic), either singly or in combination.

The amount of fluidity-assisting additive(s) incorporated by dry blending may be in the range of from, for example, 0.05 or 0.1 to 5% by weight, based on the total weight of the composition without the additive(s).

Each fluidity-assisting post-blended additive is generally in finely divided form and may have a particle size up to 5 microns, or even up to 10 microns in some cases. Preferably, however, the particle size is not greater than 2 microns, and is more especially not greater than 1 micron.

When the fluidity-assisting additive comprises two or more products it is strongly preferred for at least this component to be pre-mixed, preferably intimately and homogeneously by a high shear technique, before being blended with the composition. The case where the post-blend additive includes wax-coated silica, and that material is incorporated and post-blended separately, should also be mentioned.

A powder coating material according to the invention may in principle be applied to a substrate by any suitable process of powder coating technology, for example by electrostatic spray coating or by fluidised-bed processes.

In electrostatic application the powder coating particles are electrostatically charged and caused to adhere to a substrate which is usually metallic and electrically earthed. The charging of the powder coating particles is usually achieved by interaction of the particles with ionised air (corona charging) or by friction (triboelectric, tribostatic or "tribo" charging) employing a spray gun. The charged particles are transported in air towards the substrate and their final deposition is influenced, *inter alia*, by the electric field lines that are generated between the spray gun and the substrate.

In a fluidized-bed process the substrate is preheated (typically to 200° C - 400° C) and dipped into a fluidised-bed of the powder coating material. The powder particles that come into contact with the preheated substrate melt and adhere to the surface of the substrate. In the case of thermosetting powder coatings, the initially-coated substrate may be subjected to further heating to complete the curing of the applied coating.

In so-called electrostatic fluidised bed processes, a charge is induced into the system by the direct application of electrical energy. This may be done in a number of ways. In one method, fluidising air is ionised using a corona discharge, and the ionised air in turn charges the powder particles (corona-charging), so that a cloud of charged powder particles is formed above the surface of the fluidised bed. The substrate workpiece (earthed) is introduced into the cloud and powder particles are deposited on the substrate surface by electrostatic attraction. No preheating of the substrate workpiece is required. Such corona-charging electrostatic fluidised-bed processes are especially suitable for coating small articles, because the rate of deposition of the powder particles becomes less as the article is moved away from the surface of the charged bed.

WO 99/30838 describes an alternative (but non-corona-charging) electrostatic fluidised bed process for forming a coating on a conductive substrate, which comprises establishing a fluidised bed of a powder coating composition, immersing the substrate wholly or partly within the said fluidised bed, applying a voltage to the substrate for at least part of the period of immersion, whereby particles of the powder coating composition adhere to the substrate, withdrawing the substrate from the fluidised bed and forming the adherent particles into a continuous coating over at least part of the substrate.

Further (non-corona-charging) electrostatic fluidised bed processes are described in WO 02/98577, WO 2004052557 and WO 2004052558. In all of these, the substrate is either electrically isolated or earthed. In WO 02/98577 and WO 2004052557 a voltage is applied to the conductive part of the fluidising chamber, in WO 02/98577 the substrate being conductive and in WO 2004052557 the substrate being either electrically non-conductive or poorly conductive, and in WO 2004052558 an electrically conductive electrode, to which a voltage is applied, is positioned to influence the extent to which charged particles adhere to a region of the substrate.

The powder material of the present invention comprises at least one solid film-forming resin and includes any curing agent required therefor. Usually the powder material is coloured, and the colouring agent or agents (pigments and/or dyes), plus any curing agent, is extruded with the film-forming resin(s) so that particles formed therefrom generally comprise film-forming resin, colouring agent and, where applicable, curing agent.

A powder coating material according to the invention may contain a single film-forming resin or may comprise a mixture of two or more such resins.

The film-forming resin (polymer) acts as a binder, having the capability of wetting pigments and providing cohesive strength between pigment particles and of wetting or binding to the substrate, and melts and flows in the curing/stoving process after application to the substrate to form a homogeneous film.

The or each film-forming component of a powder coating material of the invention will in general be a thermosetting system, although thermoplastic systems (based, for example, on polyamides) can in principle be used instead.

When a thermosetting resin is used, the solid polymeric binder system generally includes a solid curing agent for the thermosetting resin; alternatively two co-reactive film-forming thermosetting resins may be used.

The film-forming polymer used in the manufacture of a film-forming component of a thermosetting powder coating material according to the invention may be one or more selected from carboxy-functional polyester resins, hydroxy-functional polyester resins, epoxy resins, and functional acrylic resins.

A film-forming component of the powder coating material can, for example, be based on a solid polymeric binder system comprising a carboxy-functional polyester film-forming resin used with a polyepoxide curing agent. Such carboxy-functional polyester systems are currently the most widely used powder coatings materials. The polyester generally has an acid value in the range 10-100, a number average molecular weight $M_n$ of 1,500 to 10,000 and a glass transition temperature $T_g$ of from 30°C to 85°C, preferably at least 40°C. The poly-epoxide can, for example, be a low molecular weight epoxy compound such as triglycidyl isocyanurate (TGIC), a compound such as diglycidyl terephthalate condensed glycidyl ether of bisphenol A or a light-stable epoxy resin. Such a carboxy-functional polyester film-forming resin can alternatively be used with a bis(beta-hydroxyalkylamide) curing agent such as tetrakis(2-hydroxyethyl) adipamide.

Alternatively, a hydroxy-functional polyester can be used with a blocked isocyanate-functional curing agent or an amine-formaldehyde condensate such as, for example, a melamine resin, a urea-formaldehye resin, or a glycol ural formaldehye resin, for example the material "Powderlink 1174" supplied by the Cyanamid Company, or hexahydroxymethyl melamine. A blocked isocyanate curing agent for a hydroxy-functional polyester may, for example, be internally blocked, such as the uretdione type, or may be of the caprolactam-blocked type, for example isopherone diisocyanate.

As a further possibility, an epoxy resin can be used, with an amine-functional curing agent such as, for example, dicyandiamide. Instead of an amine-functional curing agent for an epoxy resin, a phenolic material may be used, preferably a material formed by reaction of epichlorohydrin with an excess of bisphenol A (that is to say, a polyphenol made by adducting bisphenol A and an epoxy resin). A functional acrylic resin, for example a carboxy-, hydroxy- or epoxy-functional resin, can be used with an appropriate curing agent.

Mixtures of film-forming polymers can be used; for example a carboxy-functional polyester can be used with a carboxy-functional acrylic resin and a curing agent such as a bis(beta hydroxyalkylamide) which serves to cure both polymers. As further possibilities, for mixed binder systems, a carboxy-, hydroxy- or epoxy-functional acrylic resin may be used with an epoxy resin or a polyester resin (carboxy- or hydroxy-functional). Such resin combinations may be selected so as to be co-curing, for example a carboxy-functional acrylic resin co-cured with an epoxy resin, or a carboxy-functional polyester co-cured with a glycidyl-functional acrylic resin. More usually, however, such mixed binder systems are formulated so as to be cured with a single curing agent (for example, use of a blocked isocyanate to cure a hydroxy-functional acrylic resin and a hydroxy-functional polyester). Another preferred formulation involves the use of a different curing agent for each binder of a mixture of two polymeric binders (for example, an amine-cured epoxy resin used in conjunction with a blocked isocyanate-cured hydroxy-functional acrylic resin).

Other film-forming polymers which may be mentioned include functional fluoropolymers, functional fluorochloropolymers and functional fluoroacrylic polymers, each of which may be hydroxy-functional or carboxy-functional, and may be used as the sole film-forming polymer or in conjunction with one or more functional acrylic, polyester and/or epoxy resins, with appropriate curing agents for the functional polymers.

Other curing agents which may be mentioned include epoxy phenol novolacs and epoxy cresol novolacs; isocyanate curing agents blocked with oximes, such as isopherone diisocyanate blocked with methyl ethyl ketoxime, tetramethylene xylene diisocyanate blocked with acetone oxime, and Desmodur W (dicyclohexylmethane diisocyanate curing agent) blocked with methyl ethyl ketoxime; light-stable epoxy resins such as "Santolink LSE 120" supplied by Monsanto; and alicyclic poly-epoxides such as "EHPE-3150" supplied by Daicel.

The film-forming resin, including any crosslinker or curing agent therefore is generally present in the powder coating composition of the invention in an amount of at least 50 wt.%, more specifically at least 60%, still more specifically at least 65 wt.%. It is generally present in an amount of at most 95wt.%, more specifically at most 85 wt.%. All this is calculated on the weight of the powder coating composition without post-blended additives.

The powder coating composition may or may not contain a pigment, as is known in the art. If a pigment is used it is generally present in an amount of 0.1-40 wt.%, more specifically, 5-35 wt.%. The exact amount of pigment will depend on the specific circumstances, including the colour of the pigment. Usually a pigment content of 20 to 35 wt.% is used, although in the case of dark colours opacity can be obtained with 0.1-10% by weight of pigment. All this is calculated on the weight of the powder coating composition without post-blended additives.

Examples of pigments which may be used are inorganic pigments, such as, for example, titanium dioxide white, red and yellow iron oxides, chrome pigments and carbon black, and organic pigments such as, for example, phthalocyanine, azo, anthraquinone, thioindigo, isodibenzanthrone, triphendioxane and quinacridone pigments, vat dye pigments and lakes of acid, basic and mordant dyestuffs. Dyes may be used instead of or as well as pigments. A coloured coating material may contain a single colorant (pigment or dye) or may contain more than one colorant; alternatively, the coating material may be free from added colouring agents.

The powder coating material of the invention may also include one or more extenders or fillers, which may be used *inter alia* to assist opacity, whilst minimising costs, or more generally as a diluent. The following ranges should be mentioned for the total pigment/filler/extender content of the film-forming polymeric material: 0% to 55% by weight, 0% to 50% by weight, 10% to 50% by weight, 0% to 45% by weight, and 25% to 45% by weight. Usually, these colouring agents and performance additives will be incorporated into the film-forming material before and/or during the extrusion or other homogenisation process, and not by post blending.

In a preferred embodiment, the powder coating material of the present invention comprises at least 10wt%, preferably at least 20wt%, of filler.

The function of coatings is of course protective, but appearance is also important, and the film-forming resin and other ingredients are selected so as to provide the desired performance and appearance characteristics. In relation to performance, coatings should generally be durable and exhibit good weatherability, stain or dirt resistance, chemical or solvent resistance and/or corrosion resistance; as well as good mechanical properties, e.g. hardness, flexibility or resistance to mechanical impact; the precise characteristics required will depend on the intended use. The material must, of course, be capable of forming a coherent film on the substrate, and good flow and levelling of the material on the substrate are required. Accordingly, the powder coating material generally also contains one or more performance additives such as, for example, a flow-promoting agent, a plasticiser, a stabiliser, for example a stabiliser against UV degradation, or an anti-gassing agent, such as benzoin. Such additives are known additives for use in powder coating materials, incorporated with film-forming polymer before and/or during the extrusion or other homogenisation process. If performance additives are used, they are generally applied in a total amount of at most 5 wt.%, preferably at most 3 wt.%, more specifically at most 2 wt.%. If they are applied, they are generally applied in an amount of at least 0.1 wt.%, more specifically at least 1 wt.%.

After application of the powder coating material to a substrate, conversion of the resulting adherent particles into a continuous coating (including, where appropriate, curing of the applied composition) may be effected by heat treatment and/or by radiant energy, notably infra-red, ultra-violet or electron beam radiation.

The powder is usually cured on the substrate by the application of heat (the process of stoving), generally for a period of 10 seconds to 40 minutes, at a temperature of 90 to 280°C, until the powder particles melt and flow and a film is formed. usually for a period of from 5 to 30 minutes and usually at a temperature in the range of from 150 to 220°C, although temperatures down to 90°C may be used for some resins, especially epoxy resins, and temperatures up to 280°C are also possible; The curing times and temperatures are interdependent in accordance with the composition formulation that is used, and the following typical ranges may be mentioned:

| Temperature/°C | Time |
|---|---|
| 280 to 90 | 10 s to 40 min |
| 250 to 150 | 15 s to 30 min |
| 220 to 160 | 5 min to 20 min |

The invention also provides a process for forming a coating on a substrate, which comprises applying a powder coating material of the invention to a substrate, and forming the applied powder into a continuous coating over at least a part of the substrate. The powder may, for example, be heated to melt and fuse the particles and where appropriate cure the coating.

The film may be any suitable thickness. For decorative finishes, film thicknesses as low as 20 microns should be mentioned, but it is more usual for the film thickness to fall within the range 25-120 microns, with common ranges being 30-80 microns for some applications, and 60-120 microns or, more preferably, 60-100 microns for other applications, while film thicknesses of 80-150 microns are less common, but not rare.

The substrate may comprise a metal (for example aluminium or steel) or other conductive material, a heat-stable plastics material, wood, glass, or a ceramic or textile material. Advantageously, a metal substrate is chemically or mechanically cleaned prior to application of the material, and is preferably subjected to chemical pre-treatment, for example with iron phosphate, zinc phosphate or chromate. Substrates other than metallic substrates are in general preheated prior to application or, in the case of electrostatic spray application, are pre-treated with a material that will aid such application.

The following Examples illustrate the invention:-

<u>EXAMPLES</u>

<u>Formulations used</u>

The formulations I - VIII referred to in the Examples are as shown below:

| *Formulation I* | | *Formulation II* | |
|---|---|---|---|
| System: 50:50 polyester-epoxy hybrid | | System: polyester | |
| Raw Materials | Weight (g) | Raw Materials | Weight (g) |
| Acid-functional polyester resin | 26.30 | Acid-functional polyester resin | 67.61 |
| Epoxy resin curing agent | 26.30 | Glycidyl-functional curing agent (Araldite PT910) | 5.90 |
| Catalyst | 3.00 | | |

(continued)

| Formulation I | | Formulation II | |
|---|---|---|---|
| System: 50:50 polyester-epoxy hybrid | | System: polyester | |
| Raw Materials | Weight (g) | Raw Materials | Weight (g) |
| Flow modifier | 1.00 | Accelerator for epoxy-acid reaction (based on quaternary ammonium salt) | 0.20 |
| Wax | 0.30 | | |
| Filler (dolomite) | 10.70 | | |
| Benzoin | 0.30 | Flow modifier | 1.00 |
| Rutile titanium dioxide | 32.10 | Blanc Fix (filler) | 10.00 |
| | | Benzoin | 0.30 |
| TOTAL | 100 | Carbon black pigment | 0.50 |
| | | Indanthrone blue pigment | 0.08 |
| | | Nickel antimony titanium rutile pigment | 1.90 |
| | | Rutile titanium dioxide (white pigment) | 12.51 |
| | | TOTAL | 100 |

| Formulation III | | Formulation IV | |
|---|---|---|---|
| System: Polyester - Primid (tetrakis(2-hydroxyethyl) adipamide) | | System: 60:40 polyester-epoxy hybrid | |
| Raw Materials | Weight (g) | Raw Materials | Weight (g) |
| Acid-functional polyester resin | 58.43 | Acid-functional polyester resin | 44.11 |
| Hydroxyalkylamid curing agent (Primid XL 552) | 3.08 | Epoxy resin | 29.40 |
| | | Catalyst | 0.20 |
| Flow modifier | 1.20 | Flow Modifier | 1.00 |
| Amine modified wax | 0.49 | Filler (Dolomite) | 10.00 |
| Antioxidant | 0.10 | Benzoin | 0.30 |
| Benzoin | 0.29 | Carbon black pigment | 0.50 |
| Rutile titanium dioxide (white pigment) | 36.40 | Indanthrone blue pigment | 0.08 |
| | | Nickel antimony titanium rutile pigment | 1.90 |
| TOTAL | 100 | Rutile titanium dioxide (white pigment) | 12.51 |
| | | TOTAL | 100 |

| Formulation V | | Formulation VI | |
|---|---|---|---|
| System: 50:50 polyester-epoxy hybrid | | | |
| Raw Materials | Weight (g) | Component | Percentage Composition |
| Acid-functional polyester resin | 22.3 | Polyester resin | 58.10 |
| Epoxy resin | 22.3 | Primid (tetrakis (2-hydroxyethyl) adipamide) | 1.90 |
| Iron oxide black pigment | 0.04 | Degassing agent | 0.45 |
| Phthalocyanine green pigment | 0.004 | Wax | 0.3 |
| Iron oxide yellow pigment | 0.03 | Catalyst | 0.2 |
| Benzoin | 0.3 | UV Stabiliser | 0.25 |
| Polyethylene wax | 0.3 | Rheology modifier | 1 |
| Electrostatic charge enhancing additive | 0.3 | Titanium Dioxide | 32.7 |

(continued)

| *Formulation V* | | *Formulation VI* | |
| System: 50:50 polyester-epoxy hybrid | | | |
| Raw Materials | Weight (g) | Component | Percentage Composition |
| --- | --- | --- | --- |
| Acid functional polyester/ polyvinyl butyral resin blend | 9.81 | Polyester resin with flow acid | 5.1 |
| Filler (barytes) | 7.43 | TOTAL | 100 |
| Rutile titanium dioxide (white pigment) | 29.74 | | |
| Epoxy resin/flow modifier blend | 7.43 | | |
| TOTAL | 100 | | |

| Formulation VII | % by wt | Formulation VIII | % by wt |
| --- | --- | --- | --- |
| Acid-functional polyester resin | 59.35 | Acid-functional polyester resin | 74.4 |
| Hydroxyalkylamid curing agent | 3.72 | Blanc fixe | 8 |
| (Primid XL 552) Flow modifier | 1.06 | Catalyst | 0.1 |
| | | Primid | 2.5 |
| Filler (barites) | 3.37 | Benzoin | 0.3 |
| Titanium dioxide | 30.30 | Wax | 0.2 |
| Yellow pigment | 1.11 | Titanium dioxide | 9.5 |
| Degassing agent | 0.40 | Rheology Modifier | 1.1 |
| Anti-oxidant | 0.28 | Violet Pigment | 1.1 |
| Catalyst master batch | 0.20 | Red Pigment | 2.5 |
| Microextender filler | 0.20 | | |

Measurement of fluidisation characteristics

Fluidisation characteristics were measured in the Examples by the following methods.

Method 1

Measurement of Grad Number

**[0094]** A commercial instrument, the FT3, supplied by Freemantech Instruments, is used. Initially no fluidising air is used, five conditioning runs being carried out initially to stabilise the powder. A test run with no fluidisation is then carried out. The first level of fluidising air is then set, and two conditioning runs are used to initially fluidise the powder, followed by a test run. The two aeration tests differ only in the air flow used:

Test 1 - 0, 0.25 cc/min
Test 2-0, 0.05 cc/min

The powder is used with an addition of 0.3% of a mixture of aluminium hydroxide and aluminium oxide in the ratio 55:45 by weight ("denoted additive 1"), calculated on the weight of the powder without the additive. The aluminium oxide used was Aluminium Oxide C, ex Degussa, mean particle size <0.2 microns; the aluminium hydroxide used was Martinal OL 103C, ex Omya Croxton & Garry, mean particle size 0.8 microns. The silica used was Silica Acemot TS100, a hydrophilic amorphous silica (Degussa). The additive was blended with the powder using a standard tumbler for at least 20 min.

The energy measured at zero airflow is compared with the energy measured at a defined airflow. The difference between these two points (the Grad number, for example for an airflow of 0.05, Grad 0.05) is a measure of the ease with which a powder can be fluidised, which is an essential feature for the application of powder paints. Thus, powders with a relatively high Grad number are preferred.

Method 2

Measurement of Hausner ratios

*Aerated Density*

The sample (a minimum of 150 g of powder) is shaken in a bag. The aerated density equipment is switched on and the sieve shaker turned on to full speed. The sample is poured slowly through the sieve into a density cup on a tray, until the cup is full to excess. The sieve shaker is turned off, excess powder is scraped off the cup with a flat edge, and the density cup is weighed. Powder is returned to the bag and the process repeated. An average of the 2 values is taken.

*Tap Density*

The density cup and extender cup are lubricated with wax, the extender cup is slotted onto the density cup and screwed onto the lever arm on the Tap density equipment. The powder sample is poured into the cup to the brim to ensure no gaps when the powder is packed down by a tapping motion. The equipment is turned on, the cup being tapped 180 times automatically. Excess powder is removed, the excess powder scraped off and the cup weighed as above. An average of two values is taken.

Measurements were taken using the Hosokawa powder tester as detailed in Powder Testing Guide by Svarovsky (Kuwer Academic Publisher, Oct 1987).

*The Hausner ratio: tapped density: aerated density*

The Hausner ratio was determined for the powders as produced and also for a blend with additive 1 as above.

EXAMPLE 1

a) Bonding of powders D1 to H1 - Preparation of powders of the invention D2 to H2

Five unbonded powder formulations (not according to the invention) were prepared from the base formulation VI by extrusion on a PKL 46 BUS extruder at a barrel temperature of 120°C. The extrudate was cooled down and flattened on a cooling cylinder just outside the extruder die and then kibbled to flakes. Milling was carried out under the conditions given in Table below.

Table 1

| Powder | Mill employed | Mill settings | Sieve size | Dv(99) |
|---|---|---|---|---|
| D1 | Hosakawa ACG Jetmill[1] | Speed 10000 rpm | N/A | 15.8μm |
| E1 | Hosakawa ACG Jetmill[1] | Speed 4350 rpm | 44μm | 44.8μm |
| F1 | Hosakawa ACG Jetmill[1] | Speed 3150 rpm | 75μm | 68.5μm |
| G1 | Hosakawa ACM Mill 40 | Rotor 5600 rpm classifier 1500 rpm | 106μm | 90.1μm |
| H1 | PPS (DCMT Mill) | Rotor 7200 rpm Gassfier 4800 rpm | 106μm | 110.5μm |
| [1] All powders manufactured by the Jetmill had to be premilled to a course powder before milling. | | | | |

Particle size details (by volume) of the resulting powders are given in Table 2 below.

Table 2

| Powder | % < 5μm | % < 10μm | D(v,50) (μm) | D(v,90) (μm) |
|---|---|---|---|---|
| D1 | 33.5 | 83.2 | 6.3 | 11.5 |
| E1 | 5.9 | 21.5 | 16.9 | 33.2 |
| F1 | 3.3 | 10.7 | 25.4 | 50.8 |
| G1 | 2.8 | 8.4 | 33.2 | 65.8 |
| H1 | 2.7 | 8.3 | 33.3 | 72.4 |

Each unbonded powder was then used as starting material to prepare bonded powders according to the invention using a Mixaco CM3 mixer in which the temperature of the thermal fluid circulating in the jacket of the mixer (referred to elsewhere as the "temperature of the heater") was set to Tg + 4°C (where Tg is the glass transition temperature of the resin system used) and the blade speed was set to the eighth level (out of ten), the speeds being on an analogue scale with zero indicating still blade and 10 indicating the maximum speed. The speed is set at the start of the process but altered to ensure the chosen heating rate is obtained until the maximum temperature is reached, and is then altered to hold the powder at the maximum temperature until cooling is started. From a temperature 5°C below the Tg of the powder, the rate of heating was 2°C per minute up to the maximum (and the powder was held at this temperature for 2 mins before cooling). Other process conditions, selected to produce powders having the desired particle size distribution according to the invention, are given in Table 3 below. The maximum temperature of the powder itself is quoted, as well as the time at that temperature before cooling is begun. The weight of material to be bonded ("Load wt") is the weight of material load in the pan of the mixer unit. The weight used depends very much on the particle size distribution of the powder to be bonded. There is a difference in bulk density of the powder because smaller particles entrain more air, but the load in each case is chosen normally to keep the free space within the equipment to a minimum to maximise particle-particle interaction for the generation of heat. In the Mixaco CM3 mixer typically the load weight is about 2 kg but a lower load was used for the smaller powder D1.

Table 3

| Powder | Starting powder | Max temp & time at max temp | Load wt |
|--------|-----------------|------------------------------|---------|
| D2 | D1 | Tg + 4°C@2 mins | 1.5 kg |
| D3 | D1 | Tg + 8°C@2 mins | 1.5 kg |
| E2 | E1 | Tg + 4°C@2 mins | 2.0 kg |
| E3 | E1 | Tg + 8°C@2 mins | 2.0 kg |
| F2 | F1 | Tg + 4°C@2 mins | 2.0 kg |
| F3 | F1 | Tg + 8°C@2 mins | 2.0 kg |
| G2 | G1 | Tg + 4°C@2 mins | 2.5 kg |
| G3 | G1 | Tg + 8°C@2 mins | 2.5 kg |
| H2 | H1 | Tg + 4°C@2 mins | 2.5 kg |

Following bonding, the powders were sifted through a screen with a mesh of 120μm and the particle sizes were measured.
The particle size distribution of all the powders was measured on a Malvern Mastersizer 2000 laser scattering device, refractive index 1.45, absorption index 0.01. Various parameters defining the particle size distribution of the powders by volume and by surface area are given respectively in Tables 4 and 5 below.

Table 4

| Powder | % < 5μm | % < 10μm | D(v,50) (μm) | D(v,90) (μm) |
|--------|---------|----------|--------------|--------------|
| D2 | 15.6 | 78.9 | 7.4 | 11.8 |
| D3 | 3.8 | 46.2 | 10.4 | 17.5 |
| E2 | 2.3 | 12.4 | 20.1 | 38.0 |
| E3 | 1.7 | 7.7 | 22.0 | 40.1 |
| F2 | 2.3 | 11.7 | 21.0 | 40.5 |
| F3 | 1.6 | 7.0 | 23.1 | 43.0 |
| G2 | 1.3 | 3.4 | 37.7 | 68.3 |
| G3 | 1.4 | 4.0 | 37.0 | 74.8 |
| H2 | 1.7 | 5.4 | 35.2 | 73.4 |

Table 5

| Powder | D(s,90) | D(s,10) | $[d(s,90) \div d(s,10)]^2$ | $[d(s,90) \div d(s,10)]^2 [d(s,90)-7]$ |
|---|---|---|---|---|
| D1* | 7.7 | 3.1 | 6.17 | 8.81 |
| E1 * | 24.3 | 2.5 | 90.48 | 5.46 |
| F1 * | 36.4 | 3.5 | 108.16 | 3.68 |
| G1* | 46.3 | 3.7 | 156.59 | 3.98 |
| H1* | 47.8 | 3.4 | 197.65 | 4.84 |
| | | | | |
| D2 | 10 | 4.4 | 5.17 | 1.72 |
| D3 | 14.9 | 5.2 | 8.21 | 1.04 |
| E2 | 29.3 | 4.8 | 26 | 1.67 |
| E3 | 31.7 | 4.3 | 54.35 | 2.20 |
| F2 | 30.7 | 5.0 | 37.70 | 1.59 |
| F3 | 33.5 | 5.2 | 41.50 | 1.57 |
| G2 | 53.4 | 5.1 | 109.63 | 2.36 |
| G3 | 53.5 | 5.0 | 114.49 | 2.46 |
| H2 | 50.8 | 4.7 | 116.82 | 2.67 |
| * Comparative powder | | | | |

b) <u>Comparative Powders</u>

An unbonded powder CP1 was prepared from the base formulation VIII by extrusion and kibbling as above, followed by milling on an industrial jet-mill that is continually adjusted to provide a powder with d(v,50) = 5µm in accordance with the particle size required for the colour mixing process of EP 0372860A and described also in WO 91/18951.

A portion of the powder was bonded using a CM1000 apparatus operated at a speed of 1600 rpm with a load weight of 400kg, the temperature of the heater being set to 65°C and with a heating rate of 2°C/min to a maximum temp, followed by immediate cooling, to give powder CB1.

The particle size distribution of the starting powder and the powder prepared various powders above, was measured on the Malvern Mastersizer 2000 Laser Scattering Device, and results are given in Tables 6 and 7 below.

Table 6

| Powder | % < 5µm | % < 10µm | D(v,50) (µm) | D(v,90) (µm) | D(v,99) (µm) |
|---|---|---|---|---|---|
| CP1 | 50 | 95.2 | 5 | 8.7 | 12.3 |
| CB1 | 14.9 | 48.5 | 10.3 | 39.7 | 77.2 |

Table 7

| Powder | D(s,90) | D(s,10) | $[d(s.90) \div -d(s,10)]^2$ | $[d(s,90) \div d(s,10)]^2 \div [d(s,90)-7]$ |
|---|---|---|---|---|
| CP1 | 7.3 | 2.2 | 11.010 | 36.7 |
| CB1 | 15.1 | 2.7 | 31.277 | 3.9 |

Powder CB1 has a value of $[d(s,90) \div d(s,10)]^2 \div [d(s,90)-7]$ above 3.5 and falls outside the invention. Bonding was carried out at too high a maximum temperature, and too high an increase in d(s,90) was obtained.

Tables 8 and 9 below show the particle size distribution of a further unbonded powder CP2 of formulation IV and three bonded powders prepared therefrom, CB2.1, CB2.2 and CB2.3. Powder CB2.1 has a value of $[d(s,90) \div d(s,10)]^2 \div [d(s,90)-7]$ more than 3.5, and is not a powder of the invention. There is a substantial increase in the d(s,90) value in the powder CB2.1 and, to prepare a powder of the invention, a lower maximum temperature with a longer time at the maximum should be used (as in the case of powder CB2.2) or a lower heating rate should be used (as in the case of powder CB2.3). With a lower heating rate it may also be necessary to adjust time at the maximum temperature (an increase or decrease in the time being used as necessary).

Table 8

| Powder | % < 5μm | % < 10μm | D(v,50) (μm) | D(v,90) (μm) | D(v,99) (μm) |
|---|---|---|---|---|---|
| CP2 | 12.7 | 35.5 | 13.0 | 26.4 | 37.1 |
| CB2.1 | 6.0 | 15.4 | 23.2 | 45.7 | 63.9 |
| CB2.2 | 1.4 | 13.2 | 17.9 | 31.8 | 43.8 |
| CB2.3 | 2.2 | 9.2 | 26.1 | 49.2 | 66.3 |

Table 9

| Powder | D(s,90) | D(s,10) | $[d(s,90)\div d(s,10)]^2$ | $[d(s,90)\div d(s,10)]^2\div[d(s,90)-7]$ |
|---|---|---|---|---|
| CP2 | 18.4 | 1.5 | 150.47 | 13.2 |
| CB2.1 | 32.4 | 2.8 | 133.90 | 5.3 |
| CB2.2 | 25.8 | 5.3 | 236.70 | 10.26 |
| CB2.3 | 37.5 | 4.6 | 66.46 | 0.46 |

Tables 10 and 11 below show the particle size distribution of a further unbonded powder CP3 prepared from formulation IV and two bonded powders prepared therefrom, CB3.1. Powder CB3.1 has a value of $[d(s,90)\div d(s,10)]^2\div[d(s,90)-7]$ more than 3.5, and is not a powder of the invention. There is a small increase in the d(s,90) value, but insufficient bonding of the finer particles, so, to prepare a powder of the invention, a higher maximum temperature, optionally with a change in the time of this temperature (an increase or decrease as necessary) or a lower maximum temperature and a longer time at this temperature should be used, to produce a powder with a lower content of fine particles and with minimum further increase in d(s,90) value.

Table 10

| Powder | % < 5μm | %<10μm | D(v,50) (μm) | D(v,90) (μm) | D(v,99) (μm) |
|---|---|---|---|---|---|
| CP3 | 8.9 | 25.1 | 15.9 | 30.6 | 41.2 |
| CB3.1 | 4.8 | 13.8 | 19.3 | 34.7 | 46.5 |

Table 11

| Powder | D(s,90) | D(s,10) | $[d(s,90)\div d(s,10)]^2$ | $[d(s,90)\div d(s,10)]^2\div[d(s,90)-7]$ |
|---|---|---|---|---|
| CP3 | 22.2 | 1.7 | 170.53 | 11.22 |
| CB3.1 | 26.8 | 2 | 179.56 | 10.09 |

The particle size distribution of two commercially available powders was also measured and the results are given in Tables 12 and 13 below.

Table 12

| Powder | % < 5μm | % < 10μm | D(v,50) (μm) | D(v,99) (μm) |
|---|---|---|---|---|
| A1 | 4.0 | 11.4 | 24.8 | 67.7 |
| A2 | 2.2 | 7.8 | 30.2 | 97.5 |

Table 13

| Powder | D(s,90) | D(s,10) | $[d(s,90) \div d(s,10)]^2$ | $[d(s,90) \div d(s,10)]^2 \div [d(s,90)-7]$ |
|---|---|---|---|---|
| A1 | 35.2 | 3.1 | 128.93 | 4.57 |
| A2 | 43.2 | 3.4 | 161.44 | 4.46 |
| A1 Jotun powder A2 Rohm & Haas powder | | | | |

Figure 1

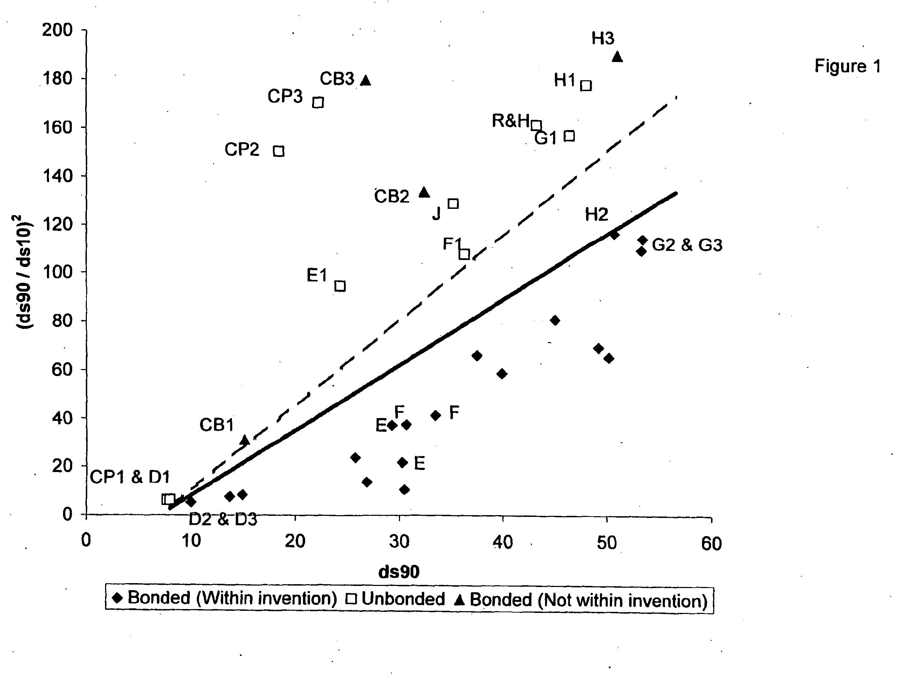

Figure 1 shows a graph which plots the value of $[d(s,90) \div ds10]^2$ against d(s,90) for each of the powders of Example 1 a and 1b. The gradient of the solid line shown in the graph is 3.5 and intersects the d(s,90) axis at d(s,90) =7$\mu$m, meaning that all points below the line fall within the invention, while all points above the line fall outside the invention. The broken line has gradient 2.7. This graph is used to illustrate visually that all the starting powders of the D1 to H1 and CP series have points above the line as did some bonded powders, while all powders according to the invention have points below the line.

The fluidity, or ease of aeration, of each powder of the D to H series was measured using Method 1 given above. The results for all the powders are shown in Table 14, which also includes the value of $([d(s,90) \div ds10]^2 \div [d(s,90)-7]$ for each powder. The Grad 0.05 and Grad 0.25 numbers for each powder according to the invention are at a satisfactorily high level, and it can be clearly seen that, for each powder, the Grad 0.05 and Grad 0.25 numbers are higher than the numbers for the corresponding powder not according to the invention.

Table 14

| Powder | Test 2 Grad 0.05 | Test 1 Grad 0.25 | $[d(s,90) \div d(s,10)]^2 \div [d(s,90)-7]$ |
|---|---|---|---|
| D1 (comparative) | 124 | 181 | 8.81 |
| D2 | 173 | 185 | 1.72 |
| D3 | 297 | 348 | 1.04 |
| E1 (comparative) | 214 | 220 | 5.46 |
| E2 | 503 | 543 | 1.67 |
| E3 | 532 | 647 | 2.20 |
| F1 (comparative) | 403 | 430 | 3.68 |
| F2 | 497 | 554 | 1.59 |
| F3 | 546 | 699 | 1.57 |
| G1 (comparative) | 318 | 442 | 3.98 |
| G2 | 548 | 663 | 2.36 |
| G3 | 643 | 789 | 2.46 |
| H1 (comparative) | 500 | 544 | 4.84 |
| H2 | 559 | 638 | 2.67 |

EXAMPLE 2

The following Example describes the preparation and testing of further powders with a particle size distribution according to the invention. Particle size data reported was obtained using the Mastersizer X laser light-scattering device from Malvern Instruments, refractive index 1.45, absorption index 0.1.

Two powders, C6 and C20, of formulation V, were prepared by extruding as in Example 1 above and micronising the chip in an Alpine ACM5 mill. This mill utilises a twin-cyclone collection mechanism and the preparation of powders was carried out by the standard operating procedure whereby the fine fraction from the second cyclone is discarded, the product collected being the product from the base of Cyclone I. Details of the particle sizes of the powders produced are given in Table 15 below. As can be seen, powder C20, with the lower d(v,90), contains much higher proportions of sub-10μm and sub-5μm particles.

Table 15

| Starting Powder | % <5μm | % < 10μm | D(v,50) (μm) | D(v, 90) (μm) |
|---|---|---|---|---|
| C6 | 4.7 | 16.8 | 20.8 | 37.8 |
| C20 | 7.5 | 24.7 | 16.2 | 28.8 |

The powders were each then bonded in a Hosakawa CycloMix apparatus operating at 350 rpm under the conditions indicated in Table 8 below (the speed being held constant throughout the process until cooling is begun). In the Cyclo mixer, the load can vary from 20 to 25 kg, with the lower limit for very, fine powder and the upper limit for very coarse powder, the upper figure being used for C6 and the lower figure for C20. Powder C1 was bonded under two different operating conditions to produce powders B6.1 and B6.2, and powder C20 was bonded to produce powder B20, as shown in Table 16.

Table 16

| Powder of the Invention | Starting powder | Bonding conditions | Temp heater | Load wt |
|---|---|---|---|---|
| B6.1<br>B6.2 | C6<br>C6 | Tg + 7°C@20 min<br>Tg + 8°C@20 min | Tg + 6°C<br>Tg + 7°C | 25kg<br>25kg |
| B20 | C20 | Tg + 8.5°C@ 20 min | Tg + 6°C | 20kg |

Particle sizes of the resulting powders were as shown in Table 17 below.

Table 17

| Powder of the Invention | % <5μm | %<10μm | D(v,50) (μm) | D(v, 90) (μm) |
|---|---|---|---|---|
| B6.1<br>B6.2 | 1.9<br>1.3 | 8.0<br>3.8 | ?<br>25.4 | 38.8<br>40.4 |
| B20 | 2.2 | 7.7 | 21.5 | 34.1 |

As seen by comparison of Tables 15 and 17, bonding of the powders under the conditions shown led to a small increase in the d(v,90) in each case and to substantial reductions in the sub-10μm and sub-5μm fractions. As shown in Table 16, The temperature used for bonding to produce powder B6.2 was higher than that used for B6.1, and led to increased bonding, there being a corresponding small increase in the d(v,90), and, more importantly, a corresponding decrease in the sub-10μm and sub-5μm fractions.

Table 18 below shows particle size characteristics based on surface area for powders C6, B6.2, C20 and B20. For powders of the invention B6.2 and B20, the value of $[d(s,90) \div d(s,10)]^2 \div [d(s,90)-7]$ is below 3.5, and indeed below 1.9 in each case, whereas the comparative powders C6 and C20 have values that are considerably higher.

Table 18

| Powder | D(s,90) | D(s,10) | $[d(s,90) \div d(s,10)]^2$ | $[d(s,90) \div d(s,10)]^2 \div [d(s,90)-7]$ |
|---|---|---|---|---|
| C6<br>B6.2<br>C20<br>B20 | 27.9<br>34.7<br>21.7<br>29.1 | 0.6<br>6.5<br>0.6<br>4.6 | 2162.25<br>28.50<br>1308.03<br>40.02 | 103.46<br>1.03<br>88.98<br>1.81 |

Fluidisation characteristics were assessed by Method 2 given above by measuring the Hausner ratio of the powders produced and of the powders containing a specified proportion of additive 1. The results are shown in Table 19 below.

Table 19

| | Fluidisation Characteristics | | |
| --- | --- | --- | --- |
| | Without additive Hausner Ratio | With additive | |
| Powder | | % | Hausner Ratio |
| C6 (comparative)<br>B6.1<br>B6.2 | 1.44-cohesive<br>1.35-non-cohesive<br>1.30-non-cohesive | 0.6%<br>0.75%<br>0.6% | 1.40-cohesive<br>1.22-non-cohesive<br>1.20-non-cohesive |
| C20 (comparative)<br>B20 | 1.68-cohesive<br>1.66-cohesive | 0.6%<br>0.6% | 1.46-cohesive<br>1.18-non-cohesive |

As can be seen by reference to Table 19, powders C6 and C20 are cohesive, and even with 0.6 additive level remain so, powder C20 being the more cohesive as it has the lower d(v,90) value and hence higher content of fine particles. Powders of the present invention B6.1 and B6.2 show a substantial reduction in Hausner ratio and are non-cohesive with and without additive, the bonding conditions for powder B6.2 bringing about a greater degree of bonding than for powder B6.1, and this is reflected in its better Hausner ratios. Powder B20 of the present invention has a lower Hausner ratio than comparable powder C20, but is classified as cohesive, in comparison to other powders of the invention B6.1 and B6.2, cohesivity arising from the higher absolute proportion of fine particles. However, with 0.6 additive content, the Hausner ratio is reduced substantially and the powder becomes non-cohesive, in contrast to powder C20.

EXAMPLE 3

The following Example describes the preparation of further powders by the bonding process, and illustrates further how bonding conditions influence the particle size distribution of the powder produced. Bonding should be carried out such that the relationship $[d(s,90)=d(s,10)]^2 \div [d(s,90)-7] \leq 3.5$ is met.

Further powder coating materials C1, CB2, C4, C8, C9, C11, C12 and C17 to C19 as shown in Table 20 below were prepared using the Alpine ACM5 mill under standard operating conditions as above whereby the product collected is the product from the base of cyclone 1 (identified as Cycl I in the subsequent Table), or by making efforts to collect the entire product from the mill, the operation of the mill's twin-cyclone collection system then being described as "total collect" mode (identified as "Total Col" in the Table). (In total collect mode the product from the base of both cyclones was collected, the airflow through the milling and collection system being adjusted to minimise product losses to the after-filter system; in reality, however, a twin-cyclone system necessarily allows some ultra-fines to pass out of the second cyclone to the after-filter system, so that there is not really a *true* "total collect" system). The top-end classification was carried out by fixing the speed of the wheel classifier in the mill.

Table 20

| Starting Powder | Formulation | Collection |
| --- | --- | --- |
| C1 | I | Total Col |
| C2 | I | Total Col |
| C4 | I | Total Col |
| C8 | I | Total Col |
| C11 | II | Cycl I |
| C12 | IV | Total Col |
| C17 | II | Cycl I |
| C18 | III | Total Col |
| C19 | III | Total Col |

The powders prepared were then loaded into a Henschel, Mixaco CM3 or Mixaco CM1000 mixer and bonded to produce agglomerated powders, starting powders C8, C16 and C19 each being bonded under different agglomeration conditions to give, respectively, powders B3.1 and B3.2; B8.1, B8.2 and B8.3; B16.1 and B16.2; and B19.1 and B19.2. For each bonded powder the mixer used (with blade speed), the weight of the material loaded in the mixer, the heater temperature and the maximum temperature reached in the mixer, as well as the total bonding time, are recorded in the following Table 21 below.

Table 21

| Powder | Starting Powder | Bonding | Mixer | Temp heater | Load, wt (kg) |
|---|---|---|---|---|---|
| B1 | C1 | Tg+8°C @ 16 min | Henschel[1] | Tg+1°C | 11.5 |
| B2 | C2 | Tg+5°C @ 10 min | Mixaco CM3[2] | Tg+3°C | 2 |
| B4 | C4 | Tg+8°C @ 16 min | Henschel[1] | Tg | 13 |
| B8.1 | C8 | Tg+5°C @ 45 min | Mixaco CM1000[4] | 45°C | 271-310 |
| B8.2 | C8 | Tg+5°C @ 55 min | Mixaco CM1000[4] | 45°C | 271-310 |
| B8.3 | C8 | Tg+5°C @ 60 min | Mixaco CM1000[4] | 45°C | 271-310 |
| B12 | C12 | Tg+8°C @ 15 min | Mixaco CM3[2] | Tg+5°C | 2 |
| B17 | C17 | Tg+8°C @ 20 min | Mixaco CM3[2] | Tg+5°C | 2 |
| B18 | C18 | Tg+5°C @ 10 min | Mixaco CM3[2] | Tg+3°C | 2 |
| B19.1 | C19 | Tg+5°C @ 17 min | Henschel[5] | Tg | 16 |
| B19.2 | C19 | Tg+2°C @ 12 min | Henschel[6] | Tg | 16 |

[1] operated at 1000-500 rpm
[2] operated at 8/10 speed setting
[3] operated at 10/10 speed setting
[4] operated at Program A (see below)
[5] operated at 1000-750 rpm
[6] operated at 1000-300 rpm

In the Table the heater temperature ("Temp heater") is the temperature at which the thermal fluid circulating in the jacket of the mixer unit is set at the start of the bonding process. For the Mixaco CM 1000 mixer that temperature is set at 45°C and afterwards dropped according to the programme used. For other mixers the temperature is constant until cooling begins.

In the Henschel mixer the speed is manually adjusted during the process, routinely being started at 1000 rpm blade speed, then reduced until the desired maximum temperature of the powder is reached (normally at 600-650 rpm), and then reduced further to the lower figure quoted in the Table where it is held for 1 minute and the cooling then started. The Henschel mixer can vary from 10 to 20 kg, with the lower limit for very fine powder and the upper limit very coarse powder.

In the Mixaco CM1000 mixer unit, the speed is adjusted throughout the process automatically by a PLC executed program. The program A used comprises the following actions in sequence: (a) speed 1200 rpm until the powder temperature reaches 45°C; (b) speed 1100 rpm to bring the powder the desired maximum temperature; (c) speed 200 rpm during cooling until the powder reaches 35°C. The load can vary from 215 to 320 kg, with the lower limit for very fine powder and the upper limit for very coarse powder.

The rate of heating was no more than 4°C/min at temperatures above 45°C, followed by immediate cooling after the maximum. The bonded powders were then sifted through a screen with a mesh of 120μm.

*Particle size measurements*

Particle size measurements for the powders, and for certain commercially available powders

C21: Commercial powder from Dong Yu
C22 : Interpon FA 515M from Akzo Nobel Powder Coatings
C23 : Interpon FA 923E from Akzo Nobel Powder Coatings
C24 : Interpon FA 916M from from Akzo Nobel Powder Coatings,

were taken using the Malvern Mastersizer X as in Example 2 above, and the results are given in Table 22 below.

Table 22

| Powder | %<5µm | %<10µm | D(v,90), µm |
|---|---|---|---|
| C1 (unbonded) | 2.7 | 14.5 | 49.2 |
| B1 | 0.7 | 4.6 | 49.7 |
| C2 (unbonded) | 5.7 | 20.9 | 41.5 |
| B2 | 2.4 | 8.4 | 45.5 |
| C4 (unbonded) | 3.0 | 15.0 | 52 |
| B4 | 1.3 | 4.8 | 58.4 |
| C8 (unbonded) | 5.0 | 18.2 | 40.1 |
| B8.1 | 3.6 | 15.0 | 40.2 |
| B8.2 | 1.8 | 10.9 | 40.4 |
| B8.3 | 1.3 | 9.3 | 40.7 |
| C11 (unbonded) | 3.1 | 15.8 | 41.9 |
| B11 | 1.2 | 8.4 | 42.3 |
| C12 (unbonded) | 5.7 | 25.6 | 25.1 |
| B12 | 2.8 | 17.4 | 26.6 |
| C17 (unbonded) | 5.7 | 22.1 | 28.1 |
| B17 | 3.3 | 16.5 | 29.4 |
| C18 (unbonded) | 4.3 | 15.2 | 37.3 |
| B 18 | 2.7 | 11.4 | 38.7 |
| C19 (unbonded) | 4.4 | 15.3 | 37.5 |
| B19.1 | * | * | * |
| B19.2 | 2.6 | 10.4 | 38.7 |
| C21 (unbonded) | N/A | 20.8 | 56.9 |
| C22 (unbonded) | 3.1 | 9.6 | 55.6 |
| C23 (unbonded) | 5.8 | 15.2 | 39.1 |
| C24 (unbonded) | 6.3 | 19.0 | 39.8 |
| * Not measurable : powder totally fused. | | | |

The Hausner ratios for the starting powders and various powders of the invention are given in Table 23, the starting powders being listed in order of maximum particle size.

Table 23

| Powder | Fluidisation Characteristics | | |
|---|---|---|---|
| | Without additive Hausner Ratio | With additive | |
| | | % | Hausner Ratio |
| C4 (comparative) | 1.32 | 0.4 | 1.26 |
| B4 | 1.25 | 0.4 | 1.10 |
| C1 (comparative) | 1.45-cohesive | 0.4 | 1.3 |
| B1 | 1.27 | 0.4 | 1.21 |
| C11 (comparative) | 1.44-cohesive | - | - |
| B11 | 1.32 | 0.75 | 1.23 |
| C2 (comparative) | 1.43-cohesive | 0.4 | 1.33 |
| B2 | 1.33 | 0.4 | 1.25 |
| C8 (comparative) | 1.45-cohesive | - | - |
| B8.3 | 1.34 | 0.75 | 1.24 |

(continued)

| Powder | Fluidisation Characteristics | | |
|---|---|---|---|
| | Without additive Hausner Ratio | With additive | |
| | | % | Hausner Ratio |
| C18 (comparative)<br>B18 | 1.45-cohesive<br>1.37 | -<br>0.75 | -<br>1.27 |
| C17 (comparative)<br>B17 | 1.77<br>1.62 | 0.3<br>0.3 | 1.56-cohesive<br>1.3 |
| C12 (comparative)<br>B12 | Not meas<br>1.6 | 0.75<br>0.3 | 1.65-cohesive<br>1.31 |
| "not means" stands for "not measurable" and means that the powder was so cohesive that it was impossible to have a reliable and consistent measurement, or sometimes that it was impossible to perform the measurement. | | | |

Except where indicated as "cohesive", the Hausner ratios shows that the powders should be classified as non-cohesive.

As can be seen from comparison of each of the pairs of powders, the powders of the invention have lower Hausner ratios than the starting powders of comparable d(v,90), some comparative powders being so cohesive without additive that it was not possible to obtain a measurement or reliable measurement for the ratio. Moreover, powders of the invention having particle sizes d(v,90) above 35μm (B1, B2, B4, B8.3 , B11 and B14) all had Hausner ratios below 1.4 (non-cohesive), whereas many comparative powders had Hausner ratios above this value (therefore classified as cohesive), and with the additive additions shown <u>all</u> of the powders of the invention had Hausner ratios below 1.4, and many of those below 1.25 in contrast to the comparative powders, where powders with d(v,90) below 35μm were cohesive, even after flow-promoting additive was added..

The Hausner ratios for a number of powders available commercially are shown in Table 24. The Hausner ratios are higher than those of powders of the present invention of comparable d(v,90).

Table 24

| Comparison powders available commercially | | |
|---|---|---|
| Comparison powder | D(v,90) | Hausner ratio |
| C21 | 56.9 | 1.48-cohesive |
| C22 | 55.6 | 1.35 |
| C23 | 39.1 | 1.41-cohesive |
| C24 | 39.8 | 1.44-cohesive |

Table 25 compares powder B8.3 of the invention with another bonded powder produced from the same starting powder but with less bonding. The further bonding in the powder B8.3 leads to superior fluidisability

Table 25

| | D(v,90) | % Sub-5μm | Hausner Ratio (no additive) |
|---|---|---|---|
| B8.1<br>88.3 | 40.7<br>40.7 | 3.6<br>1.3 | 1.43-cohesive<br>1.34 |

It should also be noted that bonding of powder C19 under the conditions shown for powder B19.2 (Henschel mixer, 100-300 rpm, load 16 kg, heater temperature Tg, bonding for 12 mins at Tg + 2°C) gave a powder of the invention complying with the relationship $[d(s,90) \div d(s,10)]^2 \div [d(s,90)-7] \leq 3.5$, but when the bonding was carried out for 17 mins at Tg + 5°C and at blade speed 1000-750 rpm, the powder produced (powder B19.1) was totally fused

EXAMPLE 4

An aqueous base composition having the formulation VII was prepared using phase inversion emulsification. Formulation ingredients were dry mixed and fed into a first inlet port of an extruder heated up to a temperature of 110°C, with cooling of the melt to 90°C, and addition of an aqueous solution containing a mixture of water and dimethylethanolamine (sufficient to give about 50% neutralisation of acid groups) and at a constant rate at a secondary inlet port of the extruder to give a mixture containing 70% solids, and with a further addition of water at a third feeding port. A yellow dispersion with a solids content of around 43 wt % was obtained.

The aqueous base composition was spray-dried using a fan jet atomiser from Spraying Systems Co, set up SUE 25 (air cap has 3 orifices at 45°) (60, 100 fluid cap, 134255-45°air cap), and an 11 kg/h liquid feed and 3.5 bar air pressure, air inlet temperature 148°C and air outlet temperature 62°C, to form powder Q1.

Powder Q2 was prepared in similar manner but with set up SUE 4 (air cap has single central orifice) using a 60, 100, 120 2-fluid (air) atomiser operating at 3 bar air pressure with 2.8kg/h liquid feed, air inlet temperature 120°C, outlet temperature 60°C (the inlet temperature was lower to maintain an outlet temperature around 60 °C, close to that for the preparation of Q1, with a lower liquid feed rate).

Details of the particle sizes, as measured by the Mastersizer 2000 instrument, of the resulting powders are given in Tables 26 and 27 below.

Table 26

| Powder | % < 5$\mu$m | % <10$\mu$m | D(v,50) ($\mu$m) | D(v,90) ($\mu$m) |
|--------|-------------|-------------|------------------|------------------|
| Q1 | 2.0 | 10.3 | 27.9 | 64.0 |
| Q2 | 5.8 | 22.7 | 6.5 | 36.5 |

Table 27

| Powder | D(s,90) | D(s,10) | D(s,90) $\div$ d(s,10)]$^2$ | [d(s,90)$\div$d(s,10)]$^2 \div$[d(s,90)-7] |
|--------|---------|---------|------------------------------|---------------------------------------------|
| Q1 | 40.9 | 4.8 | 72.6 | 2.1 |
| Q2 | 24.8 | 2.9 | 73.1 | 4.1 |
| Powder Q1 has a [d(s,90)/d(s,10)]$^2 \div$[d(s,90)-7] value < 3.5 and falls within the invention. Powder Q2 (which was prepared using a lower feed rate and different atomisation nozzle arrangement) does not.<br>Q1 has better fluidisation characteristics than Q2 and G1. | | | | |

EXAMPLE 5

Three powders of formulation II were milled to particle sizes 45$\mu$m, 40$\mu$m and 35$\mu$m respectively and were bonded on the Henshel machine with 20kg loading under the conditions shown below to give powders R1, R2 and R3 as shown.

Powder R1

| | |
|---|---|
| D(v,99) of starting powder = | 45$\mu$m |
| Heater | 50°C |
| Heating rate | 1°C per minute over last 12° before max temp |
| Maximum temperature | 55°C (Tg + 2°C) |
| Time at maximum temperature | 0 min |
| Total time to maximum temperature | 14 min |
| D(v,90) | 33$\mu$m |
| D(v,50) | 19$\mu$m |
| Sub-10 micron content | 15% |

(continued)

| Powder R2 | |
| --- | --- |
| D(v,99) of starting powder = | 40μm |
| Heater | 50°C |
| Heating rate | 1°C per minute over last 12° before max temp |
| Maximum temperature | 55°C (Tg + 2°C) |
| Time at maximum temperature | 0 min |
| Total time to maximum temperature | 14 min |
| D(v,90) | 30μm |
| D(v,50) | 18μm |
| Sub-10 micron content | 13% |

| Powder R3 | |
| --- | --- |
| D(v,99) of starting powder = | 35μm |
| Heater | 50°C |
| Heating rate | 1°C per minute over last 12° before max temp |
| Maximum temperature | 55°C (Tg + 2°C) |
| Time at maximum temperature | 0 min |
| Total time to maximum temperature | 16 min |
| D(v,90) | 26μm |
| D(v,50) | 16μm |
| Sub-10 micron content | 16% |

All powders had a $[d(s,90) \div d(s,10)]^2 \div [d(s,90)-7]$ value < 3.5.

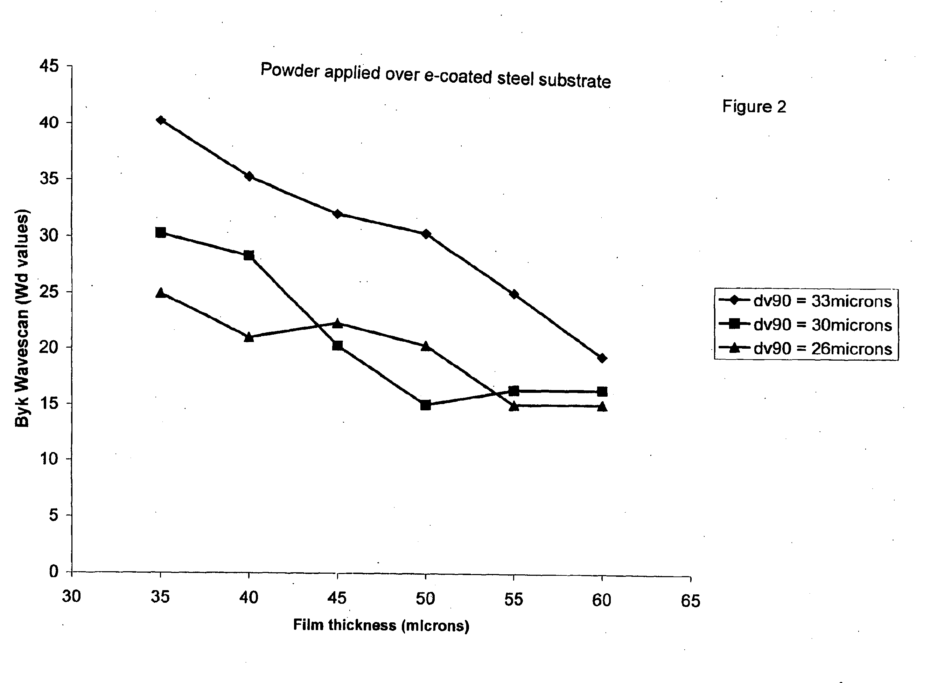

The powders were mixed with 0.3% of additive 1 and applied to steel panels by electrostatic spray gun to a number of film thicknesses. The Byk wavescan results taken using a Byk DOI 5+ are shown in Figure 2. The long wavelength value is a measure of the roughness (but not micro roughness) of the panel, and therefore of the extent of "orange peel". The lower the Wd value, the smaller the orange peel. As can be seen, films substantially free of orange peel were obtained at all film thicknesses. In changing from R1 to R3, even better results were obtained.

EXAMPLE 6

Powders E 1, E2 and E3 were used for this test.

The powders were measured for their Hausner ratio both with and without addition of 0.3% additive 1, the amount being calculated on the weight of the powder without additive. The powders were then sprayed by using an electrostatic corona gun onto panels, and both the spray and film quality noted. For spraying only the samples with 0.3% additive were tested.

The spray quality was assessed on a (linear) scale form 1 to 5 in which:-

1 = choked condition requiring agitation of the bed/spray gun just to get powder to spray, with the powder spraying in fits and starts; and

5 = spraying cleanly with no spitting and surging.

The film appearance was graded in the following way.

5 = smooth finish (some orange peel), no bits, no back ionisation;
4 = very few (small) bits, no back ionisation, little picture framing;.
3 = few (non large) bits, no back ionisation, some picture framing;
2 = bits - some large, possible back ionisation, orange peel somewhat evident, picture framing;
1 = many bits/powder "splats", back ionisation and/or orange peel present, definite picture framing.

The results are shown in Table 28 below.

Table 28

|  |  | Hausner Ratio |  |  |  |
|---|---|---|---|---|---|
|  | d(v,90) | w/o additive | with additive | spraying | film appearance |
| E 1 | 33.2 | cohesive | 1.62 | 3 | 2 |
| E2 | 38 | 1.54 | 1.3 | 4 | 4 |
| E3 | 40.1 | 1.51 | 1.3 | 4 | 3-4 |

**Claims**

1. A powder coating material comprising particles having a particle size distribution which satisfies the following equation:

$$[d(s,90)/d(s,10)]^2 \div [d(s,90)-7] \leq 3.5$$

and in which d(s,90) is greater than 7 μm, d(s,90) and d(s,10) being measured in microns, wherein d(s,x) indicates for a stated particle size (d) the percentage (x) of the total surface area of the particles that lies below the stated particle size.

2. A powder coating material as claimed in claim 1, in which the powder coating material has been formed by a fusion-agglomeration process.

3. A powder coating material as claimed in claim 2, in which the powder particles comprise composite particles in which individual particles are fused or bonded together to form clusters that do not break down under the forces encountered during application to the substrate.

4. A powder coating material as claimed in claim 2 or 3, which has been formed by a mechanical fusion process.

5. A powder coating material as claimed in claim 2, in which the powder particles comprise essentially single, generally spherical particles.

6. A powder coating material as claimed in claim 5, which has been formed by spray drying an aqueous emulsion or dispersion of the powder coating material.

7. A powder coating material as claimed in any one of the preceding claims, which is in the form of a unitary powder.

8. A process for the preparation of a powder coating material as claimed in any one of claims 1 to 7, in which particles of a powder coating material are combined by a fusion-agglomeration process into larger particles, the agglomeration conditions or the end point of agglomeration being determined so as to give a particle size distribution in which [d(s,90)/d(s,10)]$^2 \div$[d(s,90)-7]$\leq$ 3.5, and in which d(s,90) is greater than 7μm.

9. A process for the preparation of a powder coating material as claimed in any one of claims 1 to 7, said process comprising:

   melting and kneading a raw material for a powdered paint coating composition and producing pellets or chip therefrom, wherein the raw material comprises a synthetic resin and at least one further ingredient selected from pigments and additives;
   grinding the pellets or chip into pulverized particles; and if desired, comminuting the pulverized particles, and classifying the pulverized particles; the process conditions or the end point of the process being determined so as to give a particle size distribution in which [d(s,90)/d(s,10)]$^2 \div$[d(s,90)-7] $\leq$ 3.5 and in which d(s,90) is greater than 7.

10. A process as claimed in claim 8 or claim 9, which includes an agglomeration step to produce a powder coating material comprising composite particles in which individual particles are fused or bonded together to produce the desired particle size distribution.

11. A process for the preparation of a powder coating material according to claim 3, in which a powder is agglomerated to produce a powder coating material comprising composite particles in which individual particles are fused or bonded together, the agglomeration conditions and/or the end point of agglomeration being determined so as to give a particle size distribution in which $[d(s,90)/d(s,10)]^2 \div [d(s,90)-7] \leq 3.5$, and in which $d(s,90)$ is greater than 7 $\mu$m.

12. A process as claimed in either claim 10 or claim 11, in which the agglomeration is carried out at a temperature in the range of from 2 to 8°C above the glass transition temperature for a period of at least 2 mins.

13. A process as claimed in claim 11 or claim 12, in which the powder coating material is brought to the maximum temperature at a rate of no more than 2°C per minute for at least the last 5°C.

14. A process as claimed in any one of claims 8 to 13, in which the powder agglomeration is a unitary powder.

15. A process for the preparation of a powder coating material according to claims 1 to 7, which comprises mechanical fusion of a powder coating material, wherein the powder is brought to a maximum temperature in the range of from the Tg of the powder to 15°C above the Tg, at a heating rate for at least the last 3°C, preferably at least the last 4°C, up to the maximum temperature of no more than 4°C per minute, and after a period in the range of from 0 to 40 minutes at the maximum temperature the powder is cooled

16. A powder coating material produced by a process as claimed in any one of claims 8-15.

17. A process for forming a coating on a substrate, which comprises applying a powder coating material as claimed in any one of claims 1 to 7 or 16, to a substrate, and forming the applied powder into a continuous coating over at least a part of the substrate.

18. Substrate coated by the process of claim 17.

**Patentansprüche**

1. Pulverbeschichtungsmaterial, umfassend Teilchen mit einer Teilchengrößenverteilung, die die folgende Gleichung erfüllt:

$$[d(s,90)/d(s,10)]^2 / [d(s,90) - 7] \leq 3,5$$

wobei $d(s,90)$ größer als 7 $\mu$m ist, wobei $d(s,90)$ und $d(s,10)$ in $\mu$m gemessen werden, wobei $d(s,x)$ für eine angegebene Teilchengröße (d) den Prozentsatz (x) der gesamten Fläche der Teilchen angibt, der unterhalb der angegebenen Teilchengröße liegt.

2. Pulverbeschichtungsmaterial gemäß Anspruch 1, wobei das Pulverbeschichtungsmaterial durch ein Fusions-Agglomerations-Verfahren entstanden ist.

3. Pulverbeschichtungsmaterial gemäß Anspruch 2, wobei die Pulverteilchen zusammengesetzte Teilchen umfassen, bei denen einzelne Teilchen miteinander verschmolzen oder verklebt sind und **dadurch** Haufen bilden, die unter den Kräften, die während der Auftragung auf das Substrat auftreten, nicht auseinanderfallen.

4. Pulverbeschichtungsmaterial gemäß Anspruch 2 oder 3, das durch ein mechanisches Fusionsverfahren entstanden ist.

5. Pulverbeschichtungsmaterial gemäß Anspruch 2, wobei die Pulverteilchen im Wesentlichen einzelne, weitgehend sphärische Teilchen umfassen.

6. Pulverbeschichtungsmaterial gemäß Anspruch 5, das durch Sprühtrocknen einer wässrigen Emulsion oder Dispersion des Pulverbeschichtungsmaterials entstanden ist.

7. Pulverbeschichtungsmaterial gemäß einem der vorstehenden Ansprüche, das in Form eines einheitlichen Pulvers vorliegt.

8. Verfahren zur Herstellung eines Pulverbeschichtungsmaterials gemäß einem der Ansprüche 1 bis 7, wobei Teilchen eines Pulverbeschichtungsmaterials durch ein Fusions-Agglomerations-Verfahren zu größeren Teilchen kombiniert werden, wobei die Agglomerationsbedingungen oder der Endpunkt der Agglomeration so bestimmt werden, dass man eine Teilchengrößenverteilung erhält, bei der:

$$[d(s,90)/d(s,10)]^2 / [d(s,90) - 7] \leq 3,5$$

wobei d(s,90) größer als 7 $\mu$m ist.

9. Verfahren zur Herstellung eines Pulverbeschichtungsmaterials gemäß einem der Ansprüche 1 bis 7, wobei das Verfahren Folgendes umfasst:

Schmelzen und Kneten eines Rohmaterials für eine Pulverlackbeschichtungszusammensetzung und Herstellen von Pellets oder Chips aus derselben, wobei das Rohmaterial ein synthetisches Harz und wenigstens einen weiteren Bestandteil, der aus Pigmenten und Additiven ausgewählt ist, umfasst;
Mahlen der Pellets oder Chips zu Pulverteilchen; und gegebenenfalls Zerkleinern der Pulverteilchen und Klassieren der Pulverteilchen; wobei die Verfahrensbedingungen oder der Endpunkt des Verfahrens so bestimmt werden, dass man eine Teilchengrößenverteilung erhält, bei der:

$$[d(s,90)/d(s,10)]^2 / [d(s,90) - 7] \leq 3,5$$

wobei d(s,90) größer als 7 $\mu$m ist.

10. Verfahren gemäß Anspruch 8 oder 9, das einen Agglomerationsschritt umfasst, bei dem ein Pulverbeschichtungsmaterial entsteht, das zusammengesetzte Teilchen umfasst, bei denen einzelne Teilchen so miteinander verschmolzen oder verklebt sind, dass die gewünschte Teilchengrößenverteilung entsteht.

11. Verfahren zur Herstellung eines Pulverbeschichtungsmaterials gemäß Anspruch 3, wobei ein Pulver so agglomeriert wird, dass ein Pulverbeschichtungsmaterial entsteht, das zusammengesetzte Teilchen umfasst, bei denen einzelne Teilchen miteinander verschmolzen oder verklebt sind, wobei die Agglomerationsbedingungen und/oder der Endpunkt der Agglomeration so bestimmt werden, dass man eine Teilchengrößenverteilung erhält, bei der:

$$[d(s,90)/d(s,10)]^2 / [d(s,90) - 7] \leq 3,5$$

wobei d(s,90) größer als 7 $\mu$m ist.

12. Verfahren gemäß Anspruch 10 oder 11, wobei die Agglomeration bei einer Temperatur im Bereich von 2 bis 8°C oberhalb der Glasübergangstemperatur während einer Zeit von wenigstens 2 min durchgeführt wird.

13. Verfahren gemäß Anspruch 11 oder 12, wobei das Pulverbeschichtungsmaterial mit einer Geschwindigkeit auf die maximale Temperatur gebracht wird, die wenigstens bei den letzten 5 °C nicht mehr als 2 °C pro Minute beträgt.

14. Verfahren gemäß einem der Ansprüche 8 bis 13, wobei das agglomerierte Pulver ein einheitliches Pulver ist.

**15.** Verfahren zur Herstellung eines Pulverbeschichtungsmaterials gemäß den Ansprüchen 1 bis 7, das die mechanische Verschmelzung eines Pulverbeschichtungsmaterials umfasst, wobei das Pulver auf eine maximale Temperatur im Bereich von der Tg des Pulvers bis 15 °C oberhalb der Tg gebracht wird, und zwar mit einer Aufheizgeschwindigkeit, die wenigstens bei den letzten 3 °C, vorzugsweise wenigstens bei den letzten 4 °C, bis zur maximalen Temperatur nicht mehr als 4 °C pro Minute beträgt, wobei das Pulver nach einer Zeit im Bereich von 0 bis 40 Minuten, die es bei der maximalen Temperatur verbrachte, wieder abgekühlt wird.

**16.** Pulverbeschichtungsmaterial, hergestellt nach einem Verfahren gemäß einem der Ansprüche 8 bis 15.

**17.** Verfahren zur Bildung einer Beschichtung auf einem Substrat, umfassend das Auftragen eines Pulverbeschichtungsmaterials gemäß einem der Ansprüche 1 bis 7 oder 16 auf ein Substrat und das Bilden einer kontinuierlichen Beschichtung aus dem aufgetragenen Pulver über wenigstens einen Teil des Substrats.

**18.** Substrat, beschichtet nach dem Verfahren von Anspruch 17.

## Revendications

**1.** Matériau de revêtement en poudre comprenant des particules ayant une distribution granulométrique des particules qui satisfait l'équation suivante :

$$[d(s,90)/d(s,10)]^2 \ / \ [d(s,90)-7] \ \leq \ 3,5$$

et dans lequel d(s,90) est supérieur à 7 μm, d(s,90) et d(s,10) étant mesurés en micromètres, où d(s,x) indique pour une taille de particules indiquée (d) le pourcentage (x) de la surface totale des particules qui est inférieur à la taille des particules indiquée.

**2.** Matériau de revêtement en poudre selon la revendication 1, dans lequel le matériau de revêtement en poudre est formé par un procédé de fusion-agglomération.

**3.** Matériau de revêtement en poudre selon la revendication 2, dans lequel les particules de poudre comprennent des particules composites dans lesquelles les particules individuelles sont condensées ou liées ensemble pour former des agrégats moléculaires qui ne se cassent pas avec les forces rencontrées pendant l'application sur le substrat.

**4.** Matériau de revêtement en poudre selon la revendication 2 ou 3, qui est formé par un procédé de fusion mécanique.

**5.** Matériau de revêtement en poudre selon la revendication 2, dans lequel les particules de poudre comprennent essentiellement des particules seules, généralement sphériques.

**6.** Matériau de revêtement en poudre selon la revendication 5, qui est formé par le séchage par atomisation d'une émulsion ou d'une dispersion aqueuse du matériau de revêtement en poudre.

**7.** Matériau de revêtement en poudre selon l'une quelconque des revendications précédentes, qui est sous la forme d'une poudre unitaire.

**8.** Procédé de préparation d'un matériau de revêtement en poudre selon l'une quelconque des revendications 1 à 7, dans lequel les particules d'un matériau de revêtement en poudre sont combinées par un procédé de fusion-agglomération en particules plus larges, les conditions d'agglomération ou le point limite d'agglomération étant déterminé(es) de sorte à donner une distribution granulométrique des particules où $[d(s,90)/d(s,10)]^2 \ / \ [d(s,90)-7] \leq 3,5$, et où d(s,90) est supérieur à 7 μm.

**9.** Procédé de préparation d'un matériau de revêtement en poudre selon l'une quelconque des revendications 1 à 7, ledit procédé comprenant
la fusion et le malaxage d'une matière première pour une composition de revêtement de peinture en poudre et la production de billes ou de copeaux de celle-ci, où la matière première comprend une résine synthétique et au moins un autre ingrédient choisi parmi les pigments et les additifs ;

le broyage des billes ou des copeaux en particules pulvérisées ; et si souhaité, le concassage des particules pulvérisées, et la classification des particules pulvérisées ; les conditions du procédé ou le point limite du procédé étant déterminé(es) de sorte à donner une distribution granulométrique des particules où $[d(s,90)/d(s,10)]^2 / [d(s,90)-7] \leq 3,5$, et où $d(s,90)$ est supérieur à 7 $\mu$m.

10. Procédé selon la revendication 8 ou la revendication 9, qui comprend une étape d'agglomération pour produire un matériau de revêtement en poudre comprenant des particules composites dans lesquelles les particules individuelles sont condensées ou liées ensemble pour produire la distribution granulométrique des particules souhaitée.

11. Procédé de préparation d'un matériau de revêtement en poudre selon la revendication 3, dans lequel une poudre est agglomérée pour produire un matériau de revêtement en poudre comprenant des particules composites dans lesquelles les particules individuelles sont condensées ou liées ensemble, les conditions d'agglomération et/ou le point limite d'agglomération étant déterminé(es) de sorte à donner une distribution granulométrique des particules où $[d(s,90)/d(s,10)]^2 / [d(s,90)-7] \leq 3,5$, et où $d(s,90)$ est supérieur à 7 $\mu$m.

12. Procédé selon la revendication 10 ou la revendication 11, dans lequel l'agglomération est réalisée à une température comprise dans la plage allant de 2 à 8 °C au-dessus de la température de transition vitreuse pendant une période d'au moins 2 minutes.

13. Procédé selon la revendication 11 ou la revendication 12, dans lequel le matériau de revêtement en poudre est chauffé à la température maximale à une vitesse de pas plus de 2 °C par minute pendant au moins les derniers 5 °C.

14. Procédé selon l'une quelconque des revendications 8 à 13, dans lequel l'agglomération de poudre est une poudre unitaire.

15. Procédé de préparation d'un matériau de revêtement en poudre selon l'une quelconque des revendications 1 à 7, qui comprend la fusion mécanique d'un matériau de revêtement en poudre, où la poudre est chauffée à une température maximale comprise dans la plage allant de la Tg de la poudre à 15 °C au-dessus de la Tg, à une vitesse de chauffage pendant au moins les derniers 3 °C, de préférence au moins les derniers 4 °C jusqu'à la température maximale de pas plus de 4 °C par minute, et après une période dans la plage de 0 à 40 minutes à la température maximale, la poudre est refroidie.

16. Matériau de revêtement en poudre produit par un procédé selon l'une quelconque des revendications 8 à 15.

17. Procédé de formation d'un revêtement sur un substrat, qui comprend l'application d'un matériau de revêtement en poudre selon l'une quelconque des revendications 1 à 7 ou 16, sur un substrat, et la formation de la poudre enduite en un revêtement continu sur au moins une partie du substrat.

18. Substrat enduit par le procédé selon la revendication 17.

Figure 1

EP 1 907 453 B1

Powder applied over e-coated steel substrate

Figure 2

dv90 = 33microns
dv90 = 30microns
dv90 = 26microns

Byk Wavescan (Wd values)

Film thickness (microns)

EP 1 907 453 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9411446 A
- WO 0001775 A
- EP 372860 A
- EP 539385 A
- US 5461089 A
- WO 9637561 A
- EP 0820490 A
- WO 0015721 A
- WO 9745476 A
- WO 0160506 A

- EP 0805171 A
- WO 0128306 A
- WO 0159016 A
- WO 9930838 A
- WO 0298577 A
- WO 2004052557 A
- WO 2004052558 A
- EP 0372860 A
- WO 9118951 A

**Non-patent literature cited in the description**

- **ELKOTB.** *Proceedings of ICLASS,* 1982, 107-115

- **LEFEBRE.** *Atomisation and Spraying,* 1999, 233